# EUROPÄISCHE PATENTSCHRIFT

(11) **EP 0 645 988 B1**
(45) Veröffentlichungstag und Bekanntmachung des Hinweises auf die Patenterteilung: **13.01.1999**
(21) Anmeldenummer: 94910314.7
(22) Anmeldetag: 05.04.1994
(51) Int. Cl.: A61C 17/34

(54) **VERFAHREN ZUM ANTRIEB EINES ZAHNREINIGUNGSORGANES**
METHOD OF DRIVING A TOOTH-CLEANING ELEMENT
PROCEDE D'ENTRAINEMENT POUR ORGANE DE NETTOYAGE DES DENTS

(30) Priorität: 15.04.1993 CH 1140/93
(43) Veröffentlichungstag der Anmeldung: 05.04.1995
(73) Patentinhaber: Maurer, Andreas, CH-8046 Zürich (CH)
(72) Erfinder: Maurer, Andreas, CH-8046 Zürich (CH)
(74) Vertreter: Troesch Scheidegger Werner AG
(86) Internationale Anmeldenummer: CH9400068
(87) Internationale Veröffentlichungsnummer: WO9423667

(56) Entgegenhaltungen:
- DE-A- 2 608 532
- DE-A- 2 715 414
- DE-U- 8 911 427
- FR-A- 1 525 112
- US-A- 3 978 852

## Beschreibung

Die vorliegende Erfindung betrifft ein Verfahren zum oszillierenden Antrieb mindestens eines Zahnreinigungsorganes gemäss dem Oberbegriff nach Anspruch 1 sowie eine Zahnreinigungsvorrichtung, geeignet für die Durchführung des Verfahrens.

Die vorliegende Erfindung ist eine Weiterentwicklung des Zahnreinigungsgerätes gemäss der europäischen Patentanmeldung Nr. 0 173 114, womit die vorliegende Patentanmeldung eine Fortsetzung und Ergänzung der erwähnten europäischen Patentanmeldung ist.

Wie in der erwähnten europäischen Patentanmeldung angeführt, ist es wesentlich, dass die verschiedenen Zahnflächen mittels eines Reinigungsgerätes gleich gut gereinigt werden können. Es ist also wesentlich, dass insbesondere die innere, d.h. die der Mundhöhle zugekehrte Zahnfläche sowie das Zahnfleisch, und die äussere, d.h. die der Wange zugekehrte Zahnflächenseite sowie ebenfalls das Zahnfleisch, möglichst gleich gut gereinigt werden können. Weiter wichtig ist, dass an allen zu reinigenden Stellen ein bestmöglich örtlicher Reinigungsdruck gewährleistet wird. Letztendlich ist es wichtig, dass die Reinigungsorgane optimale Bewegungsabläufe ausführen, d.h. vom Zahnfleisch aus gerichtet in möglichst zahnaxialer Richtung zur Zahnkrone hin und kaum in entgegengesetzter Bewegungsrichtung.

Grundsätzlich sei auf die Beschreibung der oben er-wähnten europäischen Patentanmeldung Nr. 0 173 114 verwiesen. Insbesondere wesentlich für die vorliegende Patentanmeldung ist das in der erwähnten europäischen Patentanmeldung definierte Verfahren zum Reinigen der Zähne mittels eines Zahnreinigungsgerätes, gemäss welchem es wichtig ist, dass die Reinigung gleichzeitig auf mindestens zwei Zahnseiten vorgenommen wird.

In der EP-A-0 173 114 werden die verschiedenen Bewegungsabläufe in einem erfindungsgemäss definierten Zahnreinigungsgerät vorwiegend mit pneumatisch oder hydraulisch betätigbaren Antriebsorganen ausgeführt. Obwohl sich die hydraulisch oder pneumatisch betätigbaren Antriebsorgane an sich bewährt haben, ist es eine Aufgabe der vorliegenden Erfindung, den Antriebsmechanismus weiter zu verfeinern und zu vereinfachen, um einerseits die Betriebssicherheit von Zahnreinigungsgeräten weiter zu erhöhen, die Herstellkosten zu senken und letztendlich auch eine kleinere Konstruktion der Reinigungsköpfe zu ermöglichen.

Aus dem Stand der Technik ist das deutsche Gebrauchsmuster DE-G 89 11 427.2 gekannt, beschreibend eine elektrische Zahnbürste, wo eine durch den Bürstenkopf hindurchragende Antriebswelle eine endständig angeordnete Zahnbürste durch eine von der Welle abgeleitete Pendelbewegung hin- und herbewegt. Die Drehachse der Pendelbewegung verläuft dabei parallel zur Rotationsachse der Antriebswelle. Das erwähnte deutsche Gebrauchsmuster ist nicht geeignet einen Beitrag an die oben erwähnte definierte Aufgabe zu leisten.

Die erfindungsgemäss definierte Aufgabe wird mittels eines Verfahrens gemäss dem Wortlaut nach Anspruch 1 gelöst.

Vorgeschlagen wird ein Verfahren zum oszillierenden Antrieb mindestens eines Zahnreinigungsorganes an einem Zahnreinigungsgerät mit einem Antriebsaggregat sowie zwischen Antriebsaggregat und Reinigungsorgan wirkendem Bewegungsübertrager, wobei eine von einer Drehbewegung des Antriebsaggregates abgeleitete Drehbewegung am Bewegungsübertrager in eine Hubbewegung gewandelt wird, welche zur Achse der Drehbewegung des Antriebsaggregates gewinkelt ist und welche eine Hubbewegung am Reinigungsorgan bewirkt.

Gemäss dem Verfahren wird die Drehbewegung des Antriebsaggregates am Bewegungsübertrager zunächst in eine Drehbewegung um eine erste Achse, welche gewinkelt zur Drehachse des Antriebsaggregates gewinkelt ist, abgeleitet, welche Drehbewegung um die erste Achse in eine Drehbewegung um eine zweite Drehachse gewandelt wird, welche im wesentlichen parallel oder schiefwinklig zur Achse des Antriebsaggregates verläuft, welche zweite Drehbewegung in die Hubbewegung im wesentlichen parallel zur Ebene der Drehbewegung um die zweite Achse gewandelt wird.

Gemäss einer Ausführungsvariante des Verfahrens wird die Hubbewegung am Bewegungsübertrager mit einer Rotationsbewegung im wesentlichen senkrecht zur Richtung der Hubbewegung überlagert, wodurch die Hubbewegung auf das Reinigungsorgan übertragbar ist und gleichzeitig das Reinigungsorgan um das zweite Bewegungsübertragungsorgan rotierbar ist.

Mittels der Hubbewegung, erzeugt gemäss dem oben angeführten Verfahren, kann beispielsweise eine Hubbewegung des Reinigungsorganes in bezug auf das Zahnreinigungsgerät bzw. in bezug auf die zu reinigenden Zähne bewirkt werden.

Gemäss einer weiteren erfindungsgemässen Ausgestaltung des Verfahrens ist es auch möglich, mittels der Hubbewegung eine Pendelbewegung des Reinigungsorgans zu bewirken.

Weiter vorgeschlagen wird ein Verfahren zum oszillierenden Schwenkantrieb mindestens eines Reinigungsorganes, an welchem Reinigungsorgan mittels eines Antriebsaggregates eine Hubbewegung bewirkt wird, wobei die lineare Hubbewegung quer auf eine Schwenkachse am Reinigungsorgan für das

Bewirken der Hubbewegung des oder der Reinigungsorgane wirkt, gleichzeitig an der Schwenkachse angeordnete Rotationsmittel in Rotation in die eine Richtung bei Hub nach unten oder in die andere Richtung bei Hub nach oben versetzt werden, mittels welchen Rotationsmitteln bzw. mittels derer Rotation das oder die Reinigungsorgane in eine Pendelbewegung versetzt wird bzw. werden.

Die Rotationsmittel werden vorzugsweise durch Abrollen entlang einer Ebene, vorzugsweise parallel zur Hubbewegung in Rotation versetzt, und die Rotationsbewegung wird auf das oder die Reinigungsorgane zum Bewirken der Pendelbewegung vorzugsweise mittels Reibung übertragen.

Vorzugsweise bewirkt die gemäss einem der oben erwähnten erfindungsgemässen Verfahren am Bewegungsübertrager erzeugte und auf das Reinigungsorgan übertragene Hubbewegung gleichzeitig die Pendel- bzw. die Hubbewegung der Schwenkachse, wodurch gleichzeitig durch Rotation der Rotationsmittel das oder die Reinigungsorgane in die Pendelschwenkbewegung versetzt werden.

Gemäss einem weiteren erfindungsgemässen Verfahren zum oszillierenden Schwenkantrieb mindestens eines Reinigungsorganes, an welchem Reinigungsorgan mittels eines Antriebsaggregates eine Hubbewegung bewirkt wird, wird vorgeschlagen, dass spann- oder klickfederartige Mittel vorgesehen sind, welche mit dem oder den Reinigungsorgan(en) wirkverbunden sind und dieses in zwei Schwenkpositionen vorspannend positionieren, wobei die spann- bzw. klickfederartigen Mittel mittels mindestens einem Bewegungssystem bei der Hubbewegung gespannt oder entspannt bzw. umgespannt werden, wodurch das oder die Reinigungsorgane bzw. deren Schwenkachse zwischen den beiden Positionen hin und her geschwenkt wird bzw. werden.

Dabei ist es ebenfalls möglich, dass die Hubbewegung für das Spannen bzw. Entspannen oder Umspannen der spann- bzw. klickfederartigen Mittel mittels der Hubbewegung bewirkt wird, die am Bewegungsübertrager von der vom Antriebsaggregat abgeleiteten und gewandelten Drehbewegung erzeugt wird.

Gemäss wiederum einem weiteren erfindungsgemässen verfahren zum oszillierenden Schwenkantrieb mindestens eines Reinigungsorganes, an welchem Reinigungsorgan mittels eines Antriebsaggregates eine Hubbewegung bewirkt wird, wird vorgeschlagen, dass mittels einer weiteren Hubbewegung ein mit dem Reinigungsorgan hebelartig verbundenes Schwenkorgan synchron mit der Hubbewegung gegen eine Federkraft wirkend betätigt wird, derart, dass bei der einen Hubbewegung des Reinigungsorganes dieses mittels des Schwenkorganes in eine Schwenkposition getrieben wird und bei der anderen Hubbewegung durch die Federkraft in die andere Schwenkposition getrieben wird.

Dabei ist es wiederum vorteilhaft, dass die mittels der vom Antriebsaggregat durch den Bewegungsübertrager abgeleitete Drehbewegung in zwei Hubbewegungen gewandelt wird, wobei die eine Hubbewegung den Hub bewirkt und die andere weitere Hubbewegung auf das Schwenkorgan wirkt, um die Pendelschwenkbewegungen des Reinigungsorganes zu bewirken.

Vorzugsweise wird die Drehbewegung am Bewegungsübertrager in zwei Hubbewegungen unterschiedlichen Hubes gewandelt, wobei die eine Hubbewegung quer auf eine Schwenkachse am Reinigungsorgan übertragen wird, um eine Hubbewegung des Zahnreinigungsorganes in bezug auf das Reinigungsgerät bzw. in bezug auf die zu reinigenden Zähne zu bewirken, und die andere Hubbewegung als Schwenkantrieb auf das Schwenkorgan wirkt, um die Pendelschwenkbewegung des Reinigungsorganes zu bewirken.

Geeignet für die Durchführung der erfindungsgemäss definierten Verfahren wird eine Zahnreinigungsvorrichtung gemäß Anspruch 11 vorgeschlagen.

Die erfindungsgemäss vorgeschlagene Zahnreinigungsvorrichtung umfasst einen Handgriff und ein Kopfteil, wobei die Zahnreinigungsorgane an einem oder in einem endständig am Kopfteil angeordneten Reinigungskopf vorgesehen sind und wobei mindestens zwei Anordnungen von Reinigungsorganen am Reinigungskopf sich gegenüberliegend und entgegenwirkend angeordnet sind, um mindestens eine Hubbewegung in bezug auf den Reinigungskopf und je eine Pendelschwenkbewegung je in bezug zur anderen Anordnung der Reinigungsorgane auszuführen.

Gemäss einer Ausführungsvariante des Zahnreinigungsgerätes erstreckt sich das wellenförmige Antriebsaggregat vom Handgriff durch das Kopfteil bis zum endständig angeordneten Reinigungskopf, wo das Antriebsaggregat über ein schnecken-, kegel- oder winkelförmiges Zahnrad eines entsprechenden Schnecken-, Kegel- oder Winkelantriebes bzw. -getriebes mit dem im Reinigungskopf angeordneten ersten Bewegungsübertragungsorgan verbunden ist und dieses antreibt, welches vorzugsweise ein Rotationselement ist, wie vorzugsweise ein rad-, scheiben- oder zylinderförmig ausgebildetes Organ, mit mindestens einem in bezug auf seine Drehachse exzentrisch angeordneten wellen-, zapfen- oder nockenartigen Organ. Das Bewegungsübertragungsorgan und das exzentrische Organ sind derart angeordnet, um eine in bezug auf die Drehachse der Antriebswelle gewinkelte Hubbewegung zu erzeugen.

Gemäss einer Ausführungsvariante des Zahnreinigungsgerätes wird vorgeschlagen, dass das erste Bewegungsübertragungsorgan durch mindestens zwei sich gegenüberliegende rad-, scheiben- oder zylinderförmige Organe gebildet wird, umfassend je an der Aussenseite mindestens ein exzentrisches Organ, welche exzentrischen Organe mit einem frei um das Bewegungsübertragungsorgan drehbar und in Hubrichtung verschieblich gelagert angeordneten Trägerelement verbunden sind, welches mit mindestens einem Teil der Reinigungsorgane wirkverbunden ist, um an diesen die Hubbewegung zu bewirken. Mittels dieses frei um das Bewegungsübertragungsorgan rotierbaren Trägerelementes ist es möglich, dass im Falle eines zweiteilig ausgebildeten Reinigungskopfes der eine Teil des Kopfes, umfassend mindestens einen Teil der Reinigungsorgane, beweglich mit dem anderen Teil, wie beispielsweise einem Basisteil des Reinigungskopfes, verbunden sein kann, wodurch die Hubbewegung auf die Reinigungsorgane bei weitgehendst jeder eingenommenen Stellung in bezug auf das Basisteil für die Bewirkung der Hubbewegung übertragbar ist.

Das Ausbilden des oder der Bewegungsübertragungsorgane wie auch der Pendelelemente, Exzenterorgane und allfälliger Uebertragungselemente, um die Hubbewegung auf die Reinigungsorgane zu übertragen, ist vielfältig, und mögliche Ausführungsvarianten werden nachfolgend unter Bezug auf die beigefügten Figuren näher erläutert.

Für die Durchführung von oszillierenden Schwenkpendelbewegungen der Reinigungsorgane, wie gemäss den definierten Verfahren vorgeschlagen, werden weitere Ausführungsvarianten eines Zahnreinigungsgerätes vorgeschlagen, bei welchen mindestens ein Teil der Zahnreinigungsorgane, wie beispielsweise Zahnbürsten, um eine Schwenkachse drehbar schwenkbeweglich angeordnet sind. In der Regel erfolgt die Pendelschwenkbewegung der Reinigungsorgane zwischen zwei Positionen, nämlich einer der Zähne entfernten bzw. weggeschwenkten Position und einer an den Zähnen anliegenden, nach vorne gekippten Position, in welcher Position die Reinigung der Zähne ausgeführt wird.

Für das Bewirken dieser Pendelschwenkbewegung der Zahnreinigungsorgane, wie beispielsweise von Zahnbürsten, werden erfindungsgemäss verschiedene Ausführungen vorgeschlagen, welche sowohl in Abhängigkeit der Hubbewegung, wie oben angeführt, betrieben werden können, oder aber durch unabhängig davon angeordnete Antriebsaggregate.

Gemäss einer Ausführungsvariante wird vorgeschlagen, in den Schwenkachsen der Zahnreinigungsorgane rollen-, zylinder- oder zahnradartige Rotationselemente vorzusehen, welche mit den Zahnreinigungsorganen bzw. mit der Schwenkachse beispielsweise durch Reibung wirkverbunden sind, und welche rollen-, zahnrad- oder zylinderartige Rotationselemente gegen eine komplementäre Wandung oder Ebene aufliegend oder eingreifend beim Ausfuhren einer Hubbewegung der Schwenkachse, welche senkrecht zur Achse erfolgt, um diese Schwenkachse rotiert werden, wodurch eine Pendelschwenkbewegung der Zahnreinigungsorgane infolge Reibung bewirkt wird. Dabei ist es möglich, dass die für die Pendelschwenkbewegung der Reinigungsorgane verantwortliche Hubbewegung der Schwenkachse mittels eines Antriebsaggregates, unabhängig vom Bewegungsübertragungsorgan, erzeugt wird oder aber dass diese Hubbewegung identisch ist mit derjenigen, Hubbewegung, welche durch das Bewegungsübertragungsorgan erzeugt wird.

Die Rotationselemente können entweder mit der Schwenkachse und/oder mit mindestens einem Teil der Reinigungsorgane durch Reibung wirkverbunden sein, derart, dass bei Rotation in eine Richtung die Reinigungsorgane in eine Schwenkposition getrieben werden und bei Rotation in die andere Richtung in die andere Schwenkposition.

Gemäss einer weiteren Ausführung der Zahnreinigungsvorrichtung sind spann- oder klickfederartige Mittel vorgesehen, welche mit mindestens einem Teil der Reinigungsorgane wirkverbunden sind und diese in zwei Schwenkpositionen positionierend anordnen, wobei die sich gegenüberliegend und entgegenwirkend angeordneten Reinigungsorgane um je eine Schwenkachse von der einen in die andere Schwenkposition und umgekehrt schwenkbar angeordnet sind. Weiter ist mindestens ein Bezugssystem vorgesehen, um die spann- bzw. klickfederartigen Mittel durch Bewegen der Schwenkachse mittels einer Hubbewegung gegen und/oder von dem oder den Bezugssystemen zu spannen oder zu entspannen bzw. umzuspannen, wodurch die Zahnreinigungsorgane nach innen oder nach aussen in bezug auf den Reinigungskopf bzw. die zu reinigenden Zähne geschwenkt in der einen oder anderen Schwenkposition angeordnet sind.

Wiederum ist es möglich, dass die Hubbewegung der Schwenkachse durch ein unabhängiges Antriebsorgan bewirkt wird oder mittels der Pendelbewegung, erzeugt durch das Bewegungsübertragungsorgan.

Gemäss noch einer weiteren erfindungsgemässen Zahnreinigungsvorrichtung ist ein Antriebsorgan vorgesehen für das Erzeugen einer weiteren Hubbewegung sowie mindestens ein mit wenigstens einem Teil der Reinigungsorgane hebelartig verbundenen Schwenkorgan, das mittels der weiteren Hubbewegung betätigbar ist, um die Reinigungsorgane in einer Schwenkposition haltend anzuordnen. Weiter sind Federmittel vorgesehen, mittels welcher die Reinigungsorgane in einer anderen, der einen Schwenkposition entgegengesetzten Schwenkposition vorspannend treibbar sind. Mittels letzterer werden somit die Reinigungsorgane in die andere Schwenkposition getrieben, wenn das mit den Reinigungsorganen hebelartig verbundene Schwenkorgan nicht betätigt wird.

Erneut ist es möglich, dass ein unabhängig wirkendes Antriebsorgan vorgesehen ist oder dass das Antriebsorgan mit dem Antriebsaggregat identisch ist und das Bewegungsorgan mit mindestens zwei exzentrischen Organen wirkverbunden ist zum Erzeugen der einen und der anderen Pendelbewegung.

Um vorzugsweise bei der letzt charakterisierten Zahnreinigungsvorrichtung ein individuelles Anpassen der Zahnreinigungsorgane an die zu reinigenden Zähne zu ermöglichen, ist es vorteilhaft, wenn die Reinigungsorgane mindestens einen gummigefederten oder gummielastischen Abschnitt aufweisen, um sich so optimal an die unterschiedlichen Konturen anpassen zu können.

Weitere bevorzugte Ausführungsvarianten von Zahnreinigungsvorrichtungen sind in den abhängigen Ansprüchen charakterisiert.

Wesentlich bei der Ausgestaltung der verschiedenen Zahnreinigungsvorrichtungen, Bewegungsübertragungsorgane, Federmittel, Rotationselemente usw. ist es, dass die Hubbewegung und die Pendelschwenkbewegung der Reinigungsorgane derart überlagert bzw. synchronisiert sind, dass beim Reinigen der Zähne die Reinigungsorgane bei der Hubbewegung in Richtung Zähne von diesen weggeschwenkt sind, im Bereich der Zahnwurzel bzw. des Zahnfleisches gegen die Zähne hin geschwenkt werden, um dann bei der Hubbewegung von der Zahnwurzel zur Zahnkrone hin eine gewisse Druckwirkung zum Reinigen der Zähne auf die Zahne auszuüben. Sobald die Hubbewegung zur Zahnkrone hin beendet ist, werden die Reinigungsorgane erneut von den Zähnen weggeschwenkt, um bei der zum Zahn hin erfolgenden Hubbewegung in weggeschwenktem Zustand zu sein.

Die Erfindung wird nun beispielsweise und unter Bezug auf die beigefügten Figuren naher erläutert.

Dabei zeigen:
- Fig. 1a und 1b: schematisch im Schnitt und in Obendraufsicht einen Antrieb für das Auslösen der Hubbewegung der Reinigungsorgane,
- Fig. 2: schematisch im Schnitt einen erfindungsgemässen Antrieb für das Auslösen der Hubbewegung der Reinigungsorgane,
- Fig. 3: einen Ausschnitt eines erfindungsgemässen Antriebes zum Auslösen der Hub- und der Pendelschwenkbewegung eines Reinigungsorganes,
- Fig. 4a bis 4c: schematisch dargestellt, eine weitere Ausführungsvariante für das Auslösen der Pendelschwenkbewegung der Reinigungsorgane zum Zahn hin und von diesem weg, unter Verwendung von spann- bzw. klickfederartigen Mitteln,
- Fig. 5a und 5b: schematisch dargestellt im Schnitt, eine weitere Ausführungsvariante eines erfindungsgemässen Antriebes, insbesondere für das synchrone und überlagerte Auslösen der Hub- und Pendelschwenkbewegung der Reinigungsorgane,
- Fig. 6 und 7: einen Reinigungskopf, schematisch dargestellt und im Querschnitt, umfassend den erfindungsgemässen Antrieb analog Fig. 3,
- Fig. 8: einen Reinigungskopf im auseinandergezogenen Zustand und in perspektivischer Ansicht, umfassend einen analogen Antrieb, dargestellt in den Fig. 6 und 7,
- Fig. 9: eine weitere Ausgestaltung eines Reinigungskopfes, umfassend denselben Antriebsmechanismus wie in den Fig. 6 bis 8,
- Fig. 10a bis 10d: die Funktionsweise der Reinigungskopfe bzw. des Antriebes gemäss den Fig. 8 und 9,
- Fig. 11: einen weiteren Reinigungskopf in Perspektive und im auseinandergezogenen Zustand, umfassend einen Antrieb gemäss Fig. 4a bis 4c,
- Fig. 12: nochmals einen weiteren Reinigungskopf, beinhaltend den Antrieb gemäss Fig. 5a und 5b, und
- Fig. 13: im Schnitt den Reinigungskopf von Fig. 12 für die Darstellung der Funktionsweise des Arttriebsmechanismus gemäss den Fig. 5a und 5b bzw. von Fig. 12.

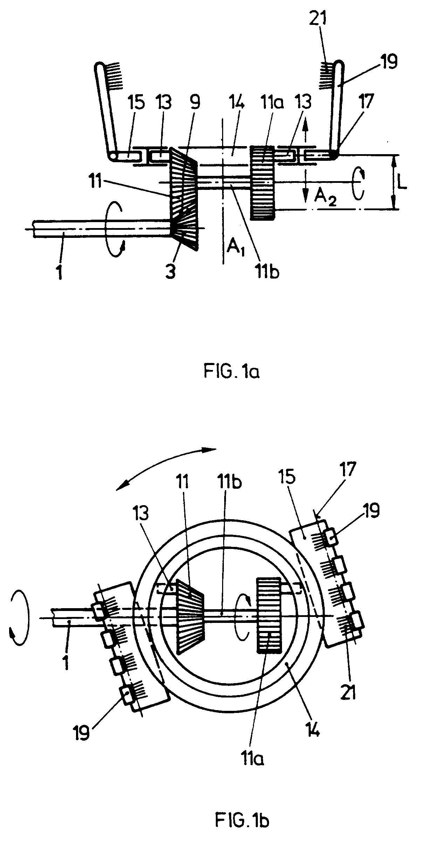

In den Fig. 1a und 1b ist im Schnitt und in Obendraufsicht schematisch ein Antrieb von Zahnbürsten im Reinigungskopf einer elektrischen Zahnbürste dargestellt. Ueber eine Antriebswelle 1 wird beispielsweise von einem wiederaufladbaren Elektromotor über ein Kegel- oder Winkelzahnrad 3 ein im Reinigungskopf angeordnetes kegelförmiges Zahnrad 11 angetrieben. Dieses Kegelzahnrad 11 weist an seiner Peripherie eine kegelförmig ausgebildete Zahnung 9 auf, die im Kegel- oder Winkelzahnrad 3 eingreift. Dieses Kegelzahnrad 11 rotiert um eine zweite Achse A₂, welche im wesentlichen parallel oder ein wenig schräg angewinkelt zur Drehachse der Antriebswelle 1 verläuft. Mit diesem Kegelzahnrad 11 starr verbunden ist ein weiteres Zahnrad 11a, beispielsweise verbunden über eine mittig angeordnete starre Antriebsachse 11b.

An der Aussenseite sind die beiden Zahnräder 11 bzw. 11a je mit einem peripher exzentrisch angeordneten Nocken 13 versehen, der entlang im wesentlichen des Umfanges je der beiden Zahnräder 11 bzw. 11a bzw. um die Achse A₂ rotiert.

Durch die Rotationsbewegung dieses Nockens bzw. Zapfens 13 entsteht so gemäss der Schnittansicht in Fig. 1a eine Auf/Ab-Pendelbewegung, wodurch ein mit diesem Nocken 13 verbundenes Trägerteil 14 eine Auf/Ab-Hubbewegung ausführt. Dieses Trägerteil 14 ist seinerseits über eine Verbindung bzw. Halterung 15 mit je seitlich zum Trägerteil 14 und sich gegenüberliegend angeordneten Reinigungsorganen, wie Zahnbürsten 19, verbunden, welche mit den entsprechenden Borsten 21 versehen sind. Diese Zahnbürsten 19 sind weiter um eine Achse 17 an der Verbindung bzw. Halterung 15 schwenkbar gelagert.

Beim Drehen der Antriebswelle 1 werden somit die beiden Zahnräder 11 bzw. 11a angetrieben, und über die je endständig angeordneten Nocken bzw. Zapfen 13 führt das Trägerteil 14 und damit verbunden die Zahnbürsten 19 eine Hubbewegung in Richtung zu einem und von einem zu reinigenden Zahn aus, wobei die Länge des Hubes L beträgt. Da die Bürsten 19 um die Achse 17 schwenkbeweglich gelagert sind, können sie sich somit der äusseren Kontur eines Zahnes anpassen. Im weiteren ergibt sich aus der Konstruktion, dass entweder das Trägerteil 14 frei rotierbar um die beiden Zahnräder 11 bzw. 11a angeordnet ist oder aber die Verbindung bzw. Halterung 15 frei drehbar um das Trägerteil 14 in diesem gehalten werden. Damit ist sichergestellt, dass die im Reinigungskopf angeordneten Zahnbürsten ebenfalls frei drehbar um eine Achse A₁ beweglich sind und sich so immer der Zahnstellung anpassen können, ohne dass eine Bedienungsperson der Zahnbürste entsprechende Korrekturbewegungen mit dem Handgriff auszuführen hat.

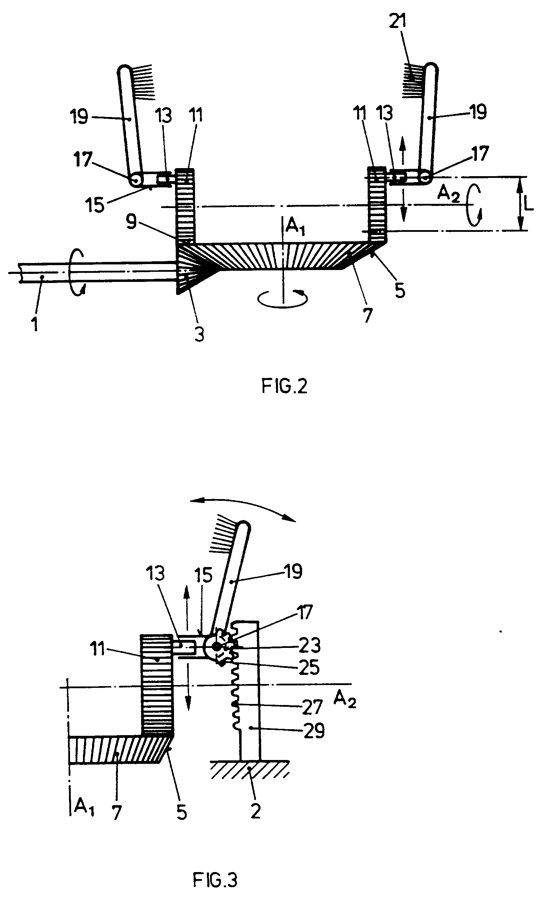

In Fig. 2 ist wiederum im Schnitt schematisch ein erfindungsgemässer Antrieb von Zahnbürsten im Reinigungskopf einer elektrischen Zahnbürste dargestellt. Erneut über die Antriebswelle 1 wird nun ein mittig im Reinigungskopf angeordnetes kegelförmiges Zahnrad 7 angetrieben, wobei dieses kegelförmige Zahnrad an seiner Peripherie eine kegelförmig ausgebildete Zahnung 5 aufweist, die im Kegel- oder Winkelzahnrad 3 eingreift. Dieses Kegelzahnrad 7 rotiert um eine erste Achse A₁, welche im wesentlichen senkrecht oder schräg angewinkelt zur Drehachse der Antriebswelle 1 verläuft. Oberhalb dieses Kegelzahnrades 7 sind je seitlich im peripheren Bereich zwei sich gegenüberliegende Zahnräder 11 angeordnet, welche wiederum über ein Zahnradgetriebe 9 durch das Kegelzahnrad 7 angetrieben werden. An ihrer Aussenseite sind die beiden Zahnräder 11 mit je einem peripher angeordneten Nocken 13 versehen, der entlang im wesentlichen des Umfanges je der beiden Zahnräder 11 bzw. um die Achse A₂ rotiert.

Aufgrund der Anordnung des mittigen Zahnrades 7 kann nun in der Anordnung gemäss Fig. 2 auf das Tragerteil 14 verzichtet werden, indem die Nocken bzw. Zapfen 13 direkt über die Verbindung bzw. Halterung 15 mit den Zahnbürstenelementen verbunden sein können. Erneut ergibt sich beim Drehen der Antriebswelle 1 eine Hubbewegung der Zahnbürsten 19 in Richtung zu einem bzw. von einem zu reinigenden Zahn.

In Fig. 3 ist schematisch eine analoge Antriebsmöglichkeit dargestellt, wo nun die Hubbewegung gemäss Fig. 1 oder 2 mit einer weitgehendst erzwungenen Schwenkbewegung der Zahnbürsten 19 überlagert wird. Dabei sind gleiche Bestandteile in Fig. 3 mit denselben Referenzzahlen versehen wie in den Fig. 1 oder 2.

Beim Drehen des Kegelzahnrades 7 und damit verbunden beim Drehen des Zahnrades 11 bewegt sich wiederum der Nocken 13 entlang der Peripherie des Zahnrades und ergibt somit die Auf/Ab-Bewegung zum Erzeugen der Hubbewegung der Zahnbürsten 19. Im Bereich der Schwenkachse 17 ist an der Verbindung bzw. Halterung 15 ein Zahnrad 23 angeordnet, das an seinem äusseren Umfang eine Zahnung 25 aufweist. Diese Zahnung 25 greift in eine entsprechende Zahnung 27 einer benachbart zur Zahnbürste 19 angeordneten Wandung 29, beispielsweise fest mit einem darunter angeordneten Gehäuse 2 verbunden. Bei der Auf- und Abbewegung des Nockens 13 bzw. der Verbindung 15 wird das freilaufende Zahnrad 23, dessen Drehachse mit der Drehachse 17 der Zahnbürste 19 verbunden ist, entlang der Zahnung 27 der Wandung 29 bewegt. Indem nun das Zahnrad 23 seitlich an der Zahnbürste 19 anliegt, vollführt bei Drehung des Zahnrades 23 die Zahnbürste 19 infolge Reibung zwischen Zahnrad und Zahnbürste eine Pendelschwenkbewegung, wobei bei Abwärtsbewegung die Zahnbürste 19 nach innen geschwenkt wird und bei der Aufwärtsbewegung nach aussen.

Da das Zahnrad 23 mit der Zahnbürste 19 seitlich nur durch Reibung verbunden ist, wird sichergestellt, dass die Zahnbürste nur je bis zu maximal vorgesehenen Schwenkpositionen vorwärts oder rückwärts gekippt wird. Insbesondere beim Reinigungsvorgang der Zähne wird somit die Bürste nur bis zum Zahn geschwenkt bzw. mit einem gewissen Druck an den Zahn angedrückt. Selbstverständlich ist es auch möglich, das Zahnrad reibhaftend mit der Drehachse 17 zu verbinden, wobei in diesem Falle jedoch die Zahnbürsten 19 dann starr mit der Drehachse verbunden sind. Weiter ist es auch möglich, anstelle einer Zahnradverbindung zwischen dem "Zahnrad" 23 und der Wandung je nur eine aufgerauhte Oberfläche vorzusehen, wodurch das Rad 23 aufgrund der herrschenden Reibung bewegt wird.

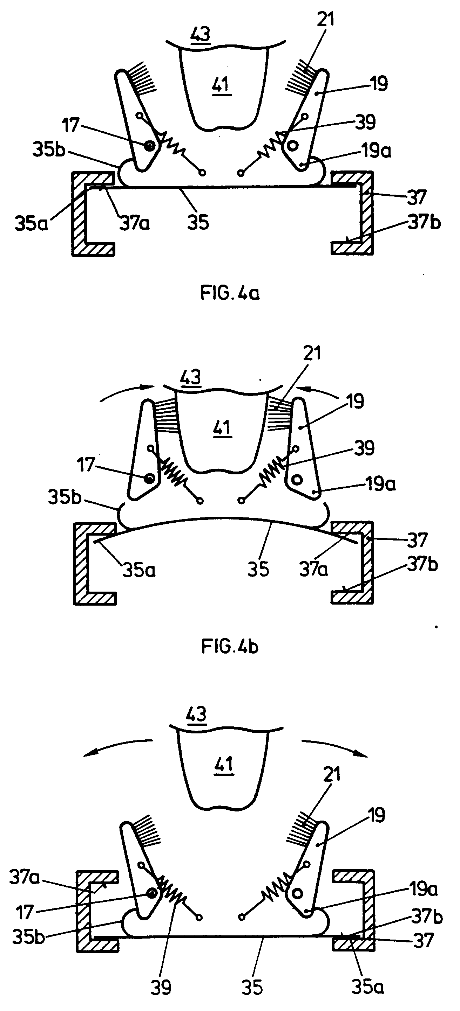

In den Fig. 4a, 4b und 4c wird eine weitere Möglichkeit dargestellt, um die Hubbewegung der Zahnbürsten 19 mit einer Schwenkbewegung zu überlagern. Dies erfolgt gemäss der Anordnung in den Fig. 4a bis 4c mittels zweier Federanordnungen 35 und 39, wobei die sich gegenüberliegend angeordneten und entgegenwirkenden Zahnbürsten 19 mittels je einer Feder 39 in Zahnrichtung vorgespannt sind. Dieser Vorspannung entgegenwirkend werden die Zahnbürsten 19 je an ihrem unteren Ende an einem Vorsprung 19a je durch einen nach innen gebogenen Abschnitt 35b einer Spann- oder Klickfeder 35 in nach aussen geschwenkter Position gehalten.

Bei der Aufwärtsbewegung der Reinigungsorgane 19 steht nun die Spann- oder Klickfeder 35 mit je einem endständig gerade vorstehenden Abschnitt 35a an der unteren Kante 37a eines Führungselementes 37 an, wodurch, wie in Fig. 4b dargestellt, je die beiden nach innen gebogenen Abschnitte 35b rückwärts nach unten weggebogen werden, wodurch die beiden endständigen Abschnitte 19a der Zahnbürsten 19 freigegeben werden. Infolge der Vorspannung in Richtung Zahn werden die beiden Zahnbürsten 19 nach innen gekippt, wodurch sie nun an der Kontur des Zahnes 41 anliegen. Diese nach innen erfolgende Kippbewegung hat dann zu erfolgen, wenn die Zahnbürsten in "ausgefahrenem" bzw. angehobenem Zustand sind, d.h. nahe am Zahnfleisch 43. Damit erfolgt die Reinigung des Zahnes 41 beim Zurückziehen der Zahnbürsten 19, indem die Borsten 21 vom Zahnfleisch Richtung Krone entlang der Zahnoberfläche bewegt werden. Sobald die Zahnbürsten 19 bei der Krone angelangt sind bzw. die Bürsten im "eingezogenen" bzw. abgesenkten Zustand sind, stehen die beiden endständigen Abschnitte 35a an der unteren Widerstandsfläche 37b der beiden seitlichen Führungen 37 an, wodurch die Klick- bzw. Spannfeder 35 nach unten umgespannt wird, wodurch die beiden nach innen gebogenen Abschnitte 35b erneut an den beiden Abschnitten 19a angreifen und die Zahnbürsten 19 nach aussen kippen.

Damit erfolgt nun die Bewegung der Zahnbürsten von der Zahnkrone in Richtung zum Zahnfleisch hin im auseinandergekippten Zustand, d.h. die Borsten 21 berühren den Zahn kaum oder gar nicht, was erwünscht ist.

In der Dentalhygiene hat es sich als vorteilhaft erwiesen, wenn beim Reinigen der Zähne die Bewegung der Borsten vorzugsweise immer vom Zahnfleisch zur Krone hin erfolgt und nicht umgekehrt.

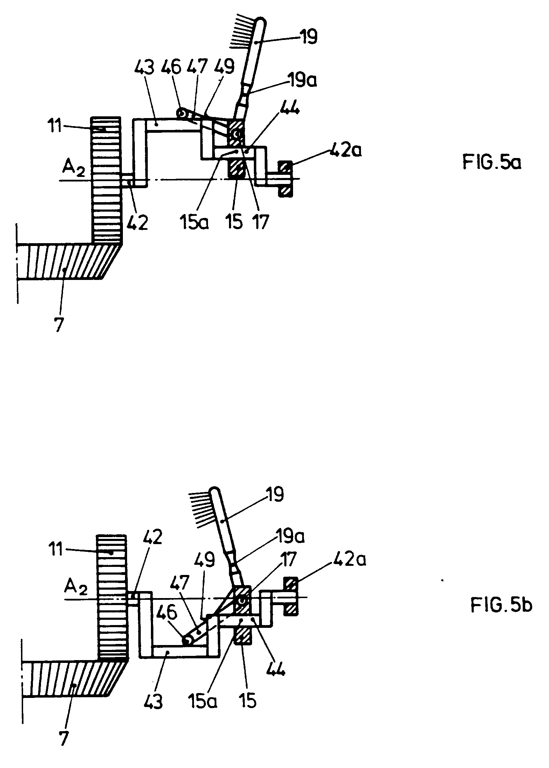

In den Fig. 5a und 5b ist eine weitere Antriebsvariante dargestellt, wie die Hubbewegung mit einer Schwenkbewegung der Zahnbürsten überlagert wird. Erneut erfolgt der Antrieb eines Zahnrades 11 über ein Kegelzahnrad 7, wobei jedoch der Antrieb selbstverständlich auch direkt vom Kegelzahnrad 3 erfolgen kann, wie beispielsweise in Fig. 1 dargestellt. Entgegen den Ausführungen in den Fig. 1 bis 3 ist am Zahnrad 11 kein peripherer Nocken 13 angeordnet. Vielmehr ist die Basis 15 der Zahnbürste 19 mit der mittigen Drehachse des Zahnrades 11 über eine Exzenterwelle 42 verbunden, welche unterschiedlich exzentrisch ausgebildete Segmente aufweist. Unmittelbar anschliessend an die Mitteldrehachse des Zahnrades 11 umfasst die Welle 42 einen stark exzentrisch ausgebildeten bzw. ausgelenkten Abschnitt 43, an welchen anschliessend ein Abschnitt 44 angeordnet ist, mit einer reduzierten Auslenkung bzw. Exzentrizität in bezug auf die Drehachse A₂ des Zahnrades 11. Endständig schlussendlich ist die Welle 42 in einer Lagerung 42a gehalten.

Dieser äussere Abschnitt 44 der Doppelexzenter-Verbindungswelle verläuft beispielsweise durch eine Aussparung 15a in der Basis 15, auf welcher gelagert die Zahnbürste 19 um die Achse 17 schwenkbeweglich gelagert ist. Der Fusspunkt der Zahnbürste 19 ist weiter über eine Verbindungsstange 47 mit einem parallel zum Zahnrad 11 verlaufenden Kipphebel 46 verbunden, welcher in seiner Länge wesentlich kürzer ist als die seitliche Auslenkung des Abschnittes 43 in Richtung dieses Kipphebels bzw. dieser Kippstange 46. Schlussendlich ist auch eine Spannfeder 49 angeordnet, um die Kippstange 46 und die damit verbundene Zahnbürste 19 nach unten bzw. nach innen vorzuspannen.

Wenn nun das Kegelzahnrad 7 von der Antriebswelle rotiert wird, wird gleichzeitig die Doppelexzenterstange 42 mittels des Zahnrades 11 um die Achse A₂ rotiert, wobei einerseits mittels des exzentrisch in bezug auf das Zahnrad 11 angeordneten Abschnittes 44 die Hubbewegung des Basisteils 15 und damit verbunden der Zahnbürsten 19 ausgeführt wird. Durch die Spannfeder 49 sind die Zahnbürsten nach innen vorgespannt angeordnet. Bei der Rotation des Abschnittes 43 greift dieser bei seiner Aufwärtsbewegung von unten her an der Stange 46 an und treibt diese nach oben. Ueber die Verbindungsstange 47 werden gleichzeitig in der Achse 17 die Zahnbürsten 19 in Pfeilrichtung gemäss Fig. 5a in Richtung vom zu reinigenden Zahn nach aussen geschwenkt.

Nach ausgeführtem Hub in Richtung weg vom Zahnreinigungskopf hin zum Zahn gibt der Abschnitt 43 die Stange 46 infolge seitlichen Auslenkens wieder frei, wodurch diese infolge der Spannkraft der Vorspannfeder 49 nach unten kippt, womit gleichzeitig die Zahnbürsten 19 nach innen in Richtung Zahn gekippt werden. Dadurch wird erneut erreicht, dass bei der Hubbewegung vom abgesenkten Zustand in den angehobenen Zustand die Zahnbürsten 19 nach aussen gekippt angeordnet sind, wodurch die Bürsten 21 sowohl den Zahn wie auch das Zahnfleisch kaum oder gar nicht berühren. Sobald die Zahnbürsten im angehobenen Zustand sind, werden diese nach innen gekippt, um mittels der Bürsten 21 eine Reinigungsbewegung vom Zahnfleisch zur Zahnkrone hin zu bewirken. Durch das Vorsehen einer flexiblen bzw. elastischen Zone 19a an der Zahnbürste 19 wird weiter ermöglicht, dass sich die Zahnbürsten individuell an die äussere Kontur eines Zahnes anpassen können.

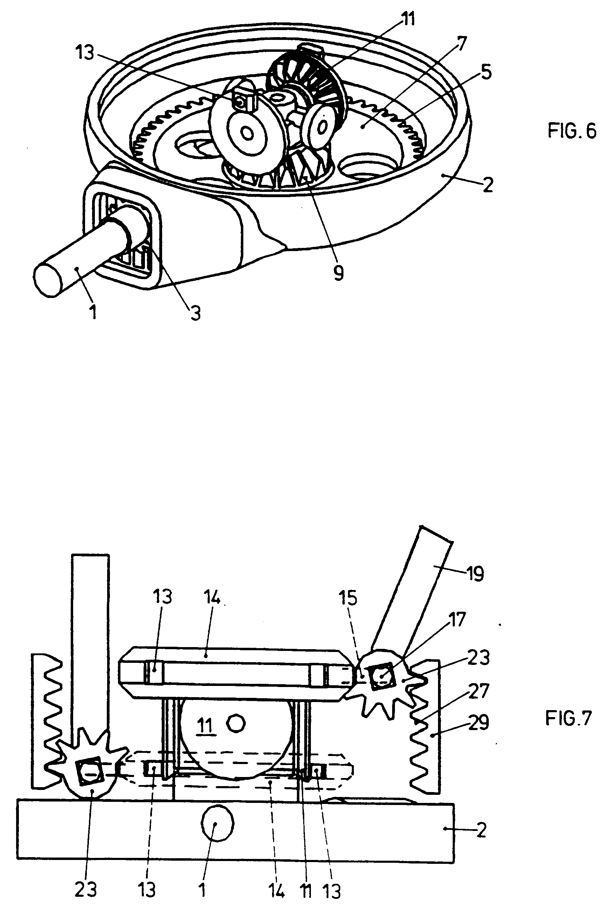

In den nachfolgenden Fig. 6 bis 13 sind die in den Fig. 1 bis 5 schematisch dargestellten Antriebsmöglichkeiten anhand von konkret ausgestalteten Reinigungsköpfen von sogenannten elektrischen Zahnreinigungsgeräten dargestellt. Dabei sind wiederum gleiche Teile mit gleichen Referenzzahlen wie in den Fig. 1 bis 5 bezeichnet.

Die Fig. 6 und 7 zeigen den Aufbau eines Reinigungskopfes, beinhaltend den Antriebsmechanismus analog von Fig. 3. Dabei zeigt Fig. 6 das Basisteil 2 des Reinigungskopfes, in welches der Antrieb beispielsweise von einem Handgriff mit einem Elektromotor über eine Antriebswelle 1 eingeführt wird. Durch das endständig an der Antriebswelle 1 angeordnete Kegelzahnrad 3 wird ein entsprechendes Kegelzahnrad 7 angetrieben, das um eine mittig im Reinigungskopf im wesentlichen senkrecht zur Antriebswelle verlaufende erste Achse rotiert. Der Antrieb des Kegelzahnrades 7 kann aber auch beispielsweise peripher mittels der Antriebswelle 1 über einen Schneckenantrieb erfolgen.

Ueber eine mittig angeordnete Zahnung 9 wird der Antrieb auf Zahnräder 11 übertragen, welche an ihrer äusseren Oberfläche im peripheren Bereich je die exzentrisch angeordneten Nocken 13 umfassen. Auf die Darstellung der Zahnbürsten wird in Fig. 6 verzichtet, um so die Uebertragung des Antriebes auf die Zahnräder 11 besser darstellen zu können.

In Fig. 7 ist ein Schnitt durch den Reinigungskopf dargestellt, wobei das Eingreifen der Antriebswelle 1 in das Basisteil 2 schematisch dargestellt ist. Erneut werden die beiden Zahnräder 11 durch das Kegelzahnrad 7 (nicht sichtbar) über das Zahnradgetriebe 9 angetrieben. Die beiden je stirnseitig an den Zahnrädern 11 angeordneten Nocken greifen in ein im wesentlichen kreisrund die beiden Zahnräder aussen herum umgebendes Trägerteil 14 ein, welches frei beweglich ist und das zusammen mit den darin eingreifenden Nocken 13 die Hubbewegung ausführt. Dabei ist in Fig. 7 eine angehobene Position dieses Trägerteiles 14 ausgezogen dargestellt und eine entsprechende abgesenkte Position gestrichelt. Seitlich ist dieses Trägerteil 14 über eine Verbindung bzw. ein Basisteil 15 mit den Drehachsen 17 der Zahnbürsten 19 verbunden, welche gleichzeitig Drehachsen der Zahnräder 23 sind. Diese Zahnräder 23 greifen an ihrer Aussenseite in entsprechende Einkerbungen 27 einer Wandung 29, welche Wandung beispielsweise drehbeweglich mit dem Basisteil 2 verbunden sein kann. Aufgrund der angehobenen Stellung eines Zahnrades 23 ist die Zahnbürste 19 nach aussen geschwenkt angeordnet.

Durch Absenken des Trägerteiles 14 in die gestrichelte Position wird das andere Zahnrad 23 entlang des Gewindes 27 um die Achse 17 rotiert, so dass die damit verbundene Zahnbürste 19 in die links dargestellte, nach innen geschwenkte Position bewegt wird. Selbstverständlich werden gleichzeitig beide sich gegenüberliegende Zahnbürsten nach innen oder nach aussen geschwenkt; die Darstellung gemäss Fig. 7 wurde so gewählt, um beide Stellungen gleichzeitig in einer Figur darstellen zu können.

Beim Bewegen des Zahnrades 23 nach unten erfolgt die Schwenkbewegung der Zahnbürste nach innen unmittelbar nach Rotation des Zahnrades, und in der verbleibenden Distanz bei der Hubbewegung schleifen Zahnbürste und Zahnrad aneinander, da die Verbindung von Zahnrad zu Zahnbürste nur mittels Reibung erfolgt. Derselbe Vorgang wiederholt sich bei der Aufwärtsbewegung des Zahnrades, indem unmittelbar nach Beginn der Hubbewegung die Zahnbürste nach aussen gekippt wird und anschliessend am Zahnrad schleift. Dabei ist es entweder möglich, dass das Zahnrad fest mit der Schwenkachse verbunden ist, jedoch die Zahnbürsten 19 frei in der Drehachse gelagert sind und seitlich an den Zahnrädern 23 über Reibung haften. Oder aber, die Zahnbürsten können fest mit der Drehachse verbunden sein, und die Zahnräder 23 sind reibehaftend mit dieser Schwenkachse verbunden.

Weiter ist es selbstverständlich auch möglich, anstelle eines Zahnrades nur eine Reibfläche peripher am "Zahnrad" 23 vorzusehen, welche an einer entsprechenden Reibfläche der Seitenwandung 29 abrollt. Wesentlich ist, dass durch Abrollen des Rades 23 die damit verbundene Zahnbürste 19 nach innen bzw. nach aussen geschwenkt wird.

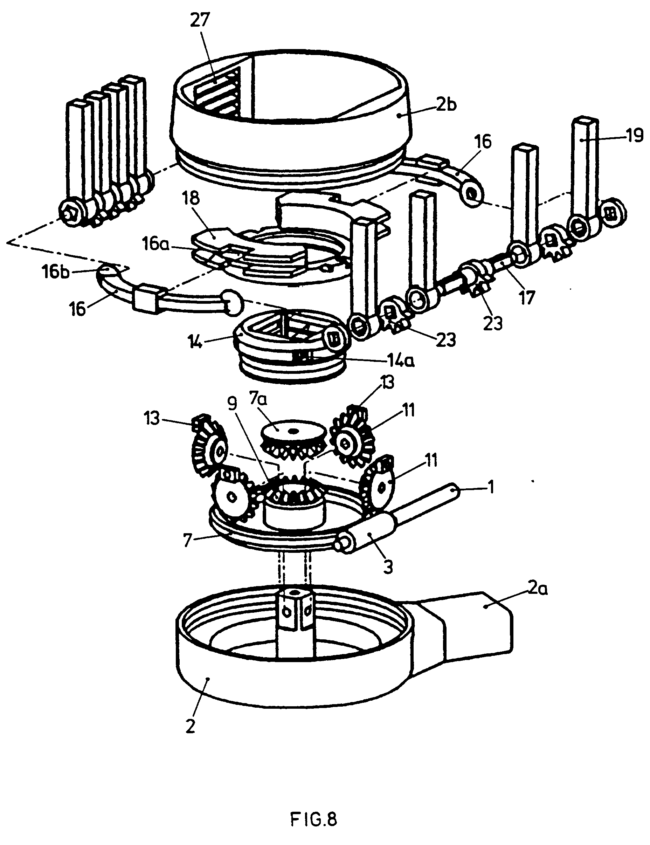

In Fig. 8 ist im auseinandergezogenen Zustand ein Reinigungskopf analog den Fig. 6 und 7 eines elektrischen Zahnreinigungsgerätes dargestellt, umfassend das Basisteil 2 mit einem Halteteil 2a sowie eine drehbeweglich mit dem Basisteil 2 verbundene Wandung 2b. Erneut erfolgt der Antrieb mittels der Antriebswelle 1 über das endständige Schneckenrad 3 auf ein mittig im Basisteil 2 angeordnetes Zahnrad 7. Von diesem Zahnrad 7 wird der Antrieb weiter über ein zentrales Zahnrad 9 auf vier symmetrisch angeordnete Kegelzahnräder 11 übertragen, welche zur Sicherung des synchronen Laufens durch ein weiteres Kegelzahnrad 7a überdeckt werden. Die vier je endständigen Nocken 13 greifen in je eine Aussparung 14a des in Hubrichtung frei beweglichen Trägerteiles 14 ein, um diesem Trägerteil 14 eine lineare Pendelbewegung zu verleihen. Auf diesem Trägerteil 14 aufliegend angeordnet ist ein Halteteil 18 mit seitlichen Einkerbungen 16a, in welche seitlichen Einkerbungen 16a Halterungen 16 eingelassen werden, die je mit endständigen Anschlagsflächen 16b die beiden Drehlager 17, umfassend die Zahnbürsten 19 und Zahnräder 23, zusammenpressend festhalten. Selbstverständlich sind die Zahnräder 11, das Trägerteil 14, das Halteteil 18, die Halterungen 16 sowie die Zahnräder und Zahnbürsten 19 allesamt innerhalb der drehbeweglichen Wandung 2b angeordnet.

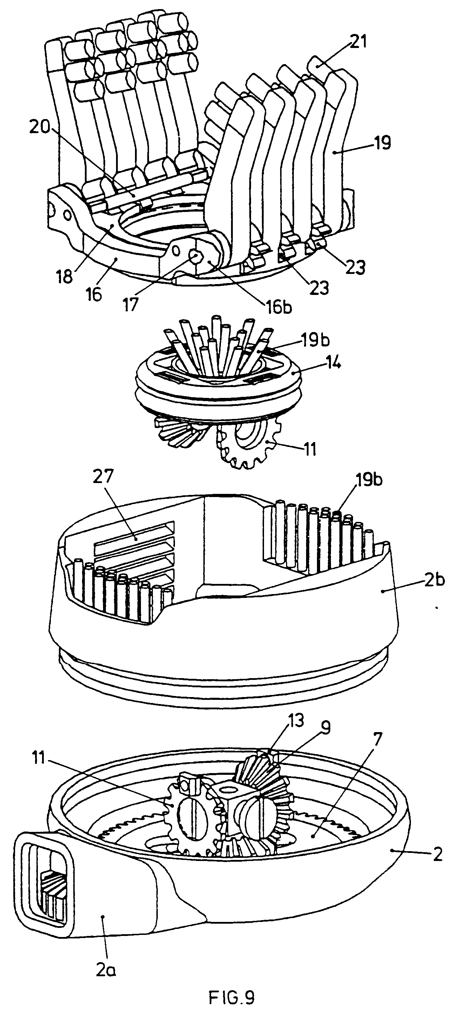

In Fig. 9 ist derselbe Zahnreinigungskopf gemäss Fig. 8 in teilweise zusammengesetztem Zustand dargestellt, wobei insbesondere die sich gegenüberliegenden Zahnbürsten 19, die Zahnräder 23 mit dem Halteteil 18 und den Halterungen 16 fest verbunden bzw. fest zusammengepresst angeordnet dargestellt sind. Um die Reibung zwischen den Zahnrädern 23 und den Zahnbürsten 19 sicherzustellen und gegebenenfalls nach einer gewissen Abnützung nachzustellen, sind weiter je zwei Haltestangen 20 vorgesehen, welche zum festen Zusammenpressen der beiden seitlichen Halterungen mit den Halteflächen 16b vorgesehen sind.

In Abänderung zu Fig. 8 umfasst der Reinigungskopf gemäss Fig. 9 nur zwei sich gegenüberliegende mittige Zahnräder 11 zum Uebertragen des Antriebes vom Zahnrad 7 auf das Trägerteil 14. Hingegen sind am Trägerteil 14, schematisch angedeutet, weitere fest mit dem Trägerteil 14 verbundene Reinigungsorgane bzw. Bürsten 19b vorgesehen, beispielsweise zum Reinigen des Interdentalraumes oder von an der Krone angeordneten flächigen Partien der Zähne.

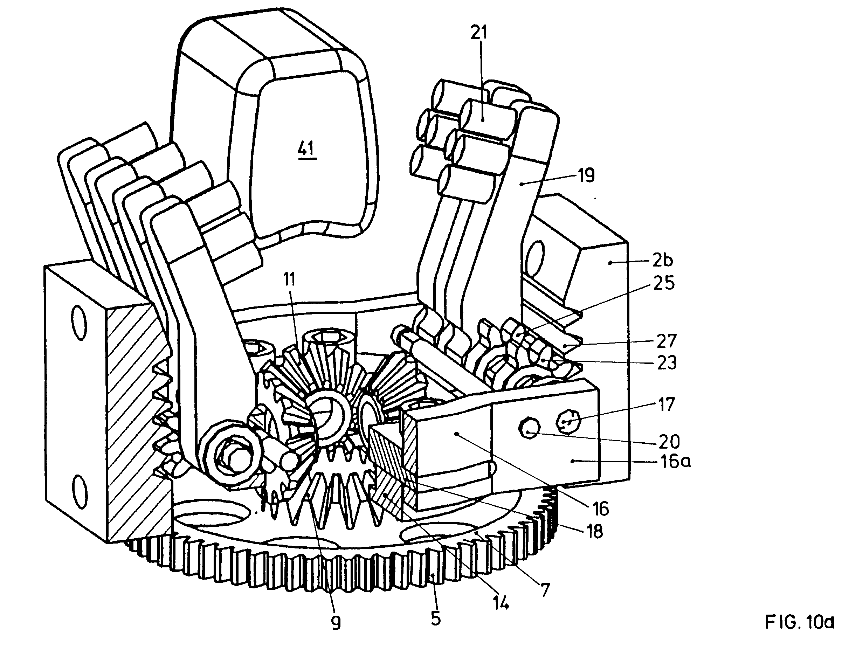

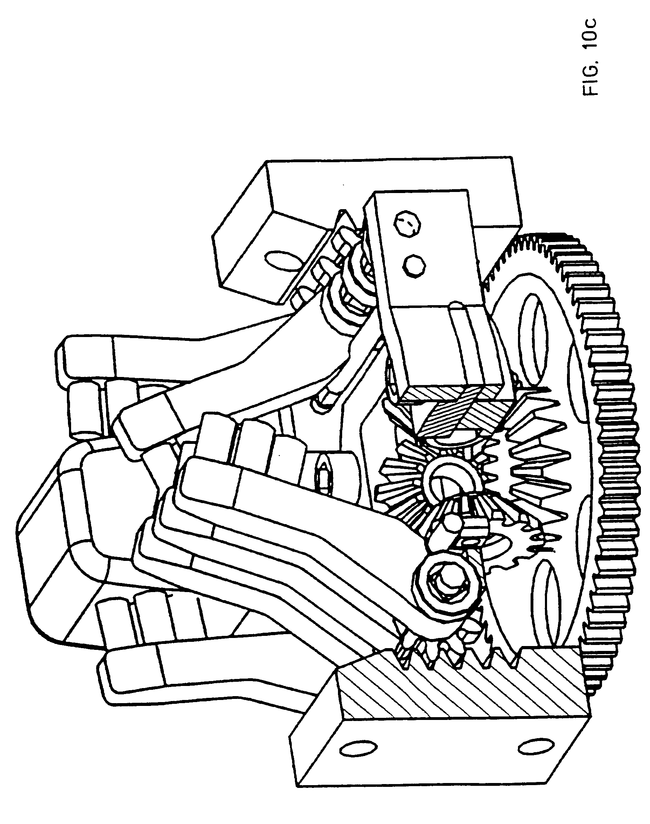

In den Fig. 10a bis 10d ist nun der funktionelle Ablauf eines Zahnreinigungskopfes gemäss den Fig. 8 bzw. Fig. 9 dargestellt. In Fig. 10a sind das Trägerteil 14, das Halteteil 18 sowie die seitlichen Halterungen 16 und damit verbunden die Zahnbürsten 19 in abgesenktem Zustand dargestellt, d.h. in von einem zu reinigenden Zahn 41 entfernter Position.

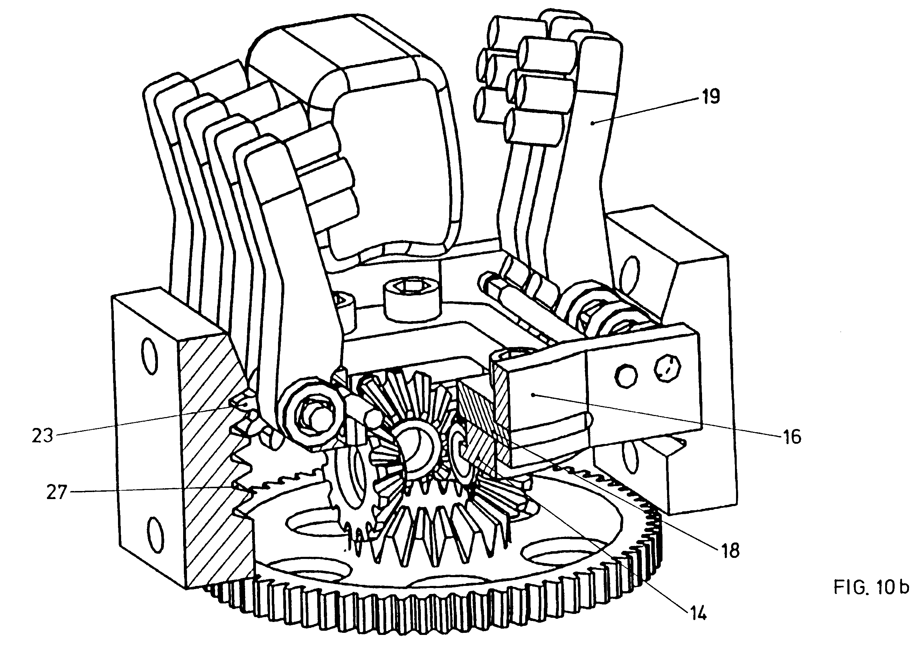

In Fig. 10b erfolgt nun das Anheben der ganzen Reinigungsanordnung, indem mittels der nicht sichtbaren Nocken 13 das Trägerteil 14, damit verbunden das Halteteil 18, die seitlichen Halterungen 16 und die Zahnbürsten 19 nach oben bewegt werden. Gleichzeitig werden infolge Eingriffs in den seitlichen Gewindekerbungen 27 die Zahnräder 23 nach aussen gedreht, wodurch infolge seitlicher Reibung unmittelbar bei Beginn der Aufwärtsbewegung die Zahnbürsten 19 nach aussen vom Zahn weggekippt werden. Sobald die Zahnbürsten 19 in rückwärts gekipptem Zustand sind, schleifen die Zahnräder 23 seitlich an den Zahnbürsten, ohne jedoch diese weiter nach hinten abzukippen.

Sobald die Aufwärtsbewegung der Nocken 13 beendet ist bzw. die entsprechende Pendelbewegung der Nocken 13 nach unten beginnt, drehen die Zahnräder 23 je in Einwärtsrichtung, wodurch wiederum, wie nun in Fig. 10c sichtbar, infolge seitlicher Reibung die Zahnbürsten gegen den Zahn hin nach innen gekippt werden. Die Abwärtsbewegung ergibt somit eine Reinigungsbewegung am Zahn vom Zahnfleisch Richtung Zahnkrone hin, was dentaltechnisch erwünscht ist.

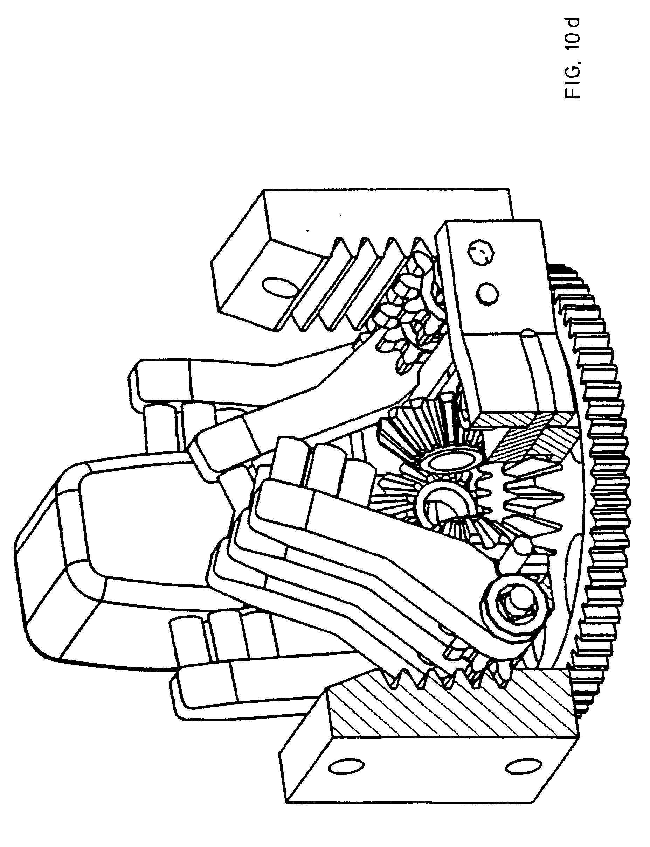

In Fig. 10d schliesslich ist die Reinigungsanordnung wiederum nach beendeter Absenkbewegung dargestellt, wobei die Zahnbürsten im noch nach innen geschwenkten Zustand dargestellt sind. Anschliessend an Fig. 10d wurden dann die Zahnbürsten, wie in Fig. 10a dargestellt, infolge Aufwärtsbewegung wieder nach aussen gekippt.

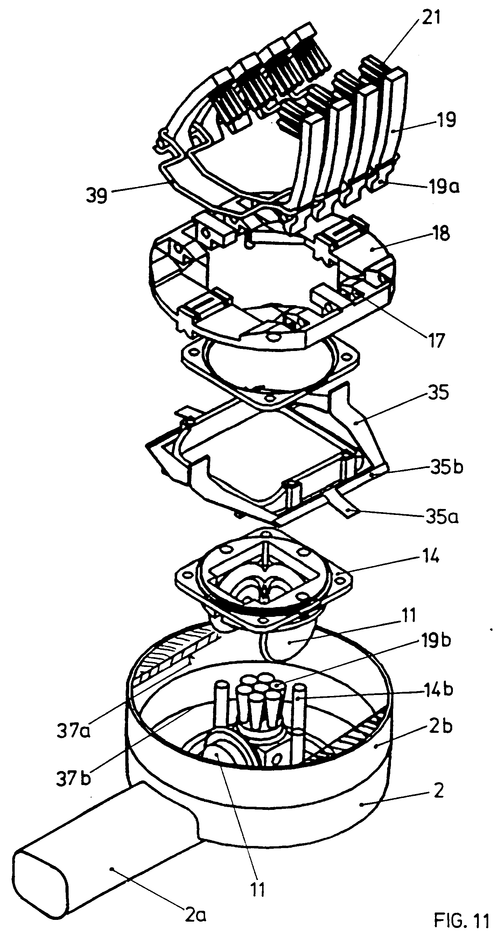

In Fig. 11 ist im auseinandergezogenen Zustand ein weiterer Reinigungskopf eines elektrischen Zahnreinigungsgerätes dargestellt, wobei wiederum mittels einer Antriebswelle (nicht dargestellt) im Basisteil 2 des Reinigungskopfes vier mittig angeordnete Zahnräder 11 angetrieben werden, welche eine Hubbewegung eines mittig angeordneten Trägerteils 14 bewirken. Auf diesem Trägerteil 14 angeordnet ist wiederum ein Halteteil 18, in welchem entgegengesetzt je in Schwenkachsen 17 zwei Zahnbürstenanordnungen 19 angeordnet sind. Diese Zahnbürsten 19 sind mittels Federelementen 39 nach innen vorgespannt angeordnet. Zwischen Halteteil 18 und Trägerteil 14 ist eine weitere Kipp- oder Spannfeder 35 angeordnet, analog der Anordnung gemäss den Fig. 4a bis 4c. Diese Spann- oder Kippfeder 35 dient dazu, um mit je einer endständigen aufgebogenen Partie 35b die Zahnbürsten 19 an ihren unteren Abschnitten 19a nach aussen zu treiben. Auf eine erneute Beschreibung der Funktionsweise des Reinigungskopfes gemäss Fig. 11 wird verzichtet und wird auf die Fig. 4a bis 4c verwiesen.

Die Spann- oder Kippfeder 35 wird mittels der endständigen vorstehenden geraden Abschnitte 35a nach oben bzw. nach unten umgespannt, wobei an der oberen drehbaren Wandung 2b des Reinigungskopfes entsprechende Anschlagflächen 37a und 37b vorgesehen sind.

In Ergänzung zu den vorab angeführten Figuren sind in Fig. 11 weiter Führungselemente 14b dargestellt, um eine einwandfreie Hubbewegung des Trägerteiles 14 innerhalb des Reinigungskopfes zu gewährleisten. Erneut sind mittig im Reinigungskopf fest angeordnete Zahnbürsten 19b dargestellt, z.B. geeignet für die Reinigung des Interdentalraumes.

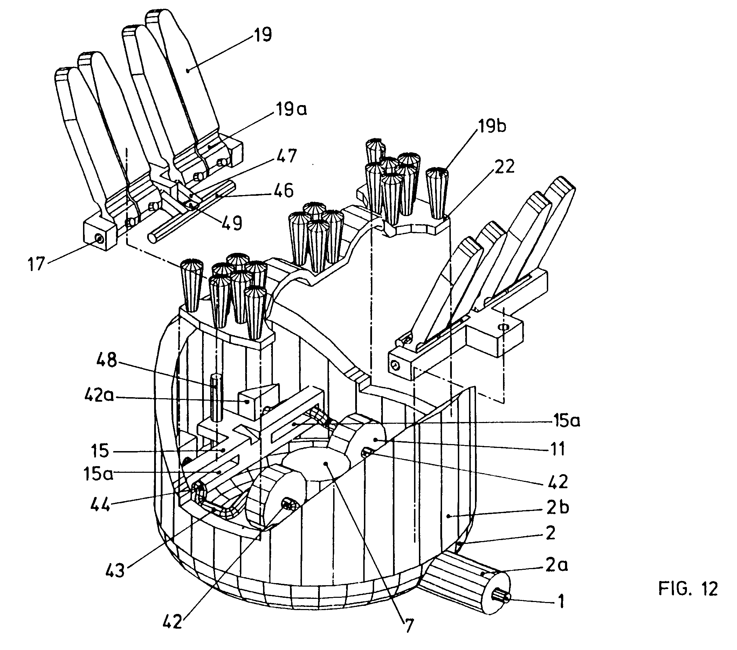

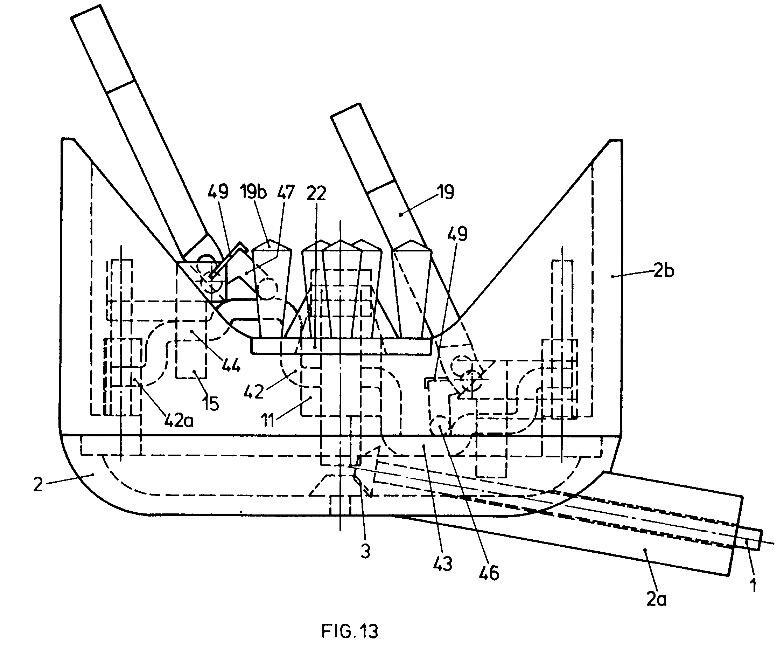

In den Fig. 12 und 13, schlussendlich, ist in Perspektive bzw. im Schnitt erneut im auseinandergezogenen Zustand bzw. im zusammengesetzten Zustand ein weiterer Reinigungskopf dargestellt, welcher einen Antrieb, analog Fig. 5a und 5b, umfasst.

Ueber die Antriebswelle 1 wird der Antrieb wiederum beispielsweise von einem Handgriff auf das mittig angeordnete Zahnrad 7 übertragen, welches beispielsweise über ein Schraubenradgetriebe den Antrieb auf die beiden Zahnräder 11 überträgt. Das Zahnrad 7 bildet somit je zusammen mit einem der beiden Zahnräder 11 ein sogenanntes Schraubenradpaar. Je beidseitig der beiden Zahnräder sind analog Fig. 5 Doppelexzenterstangen 42 angeordnet, welche in der zentralen Rotationsachse mit dem Zahnrad 11 verbunden sind und endständig in einem Lager 42a gehalten werden. Diese Doppelexzenterstangen umfassen einerseits je einen Abschnitt 43 mit grosser Auslenkung und einen dazu versetzt verlaufenden Abschnitt 44 mit kleiner Auslenkung, wobei letzterer Abschnitt je in Aussparungen 15a von einem Basisträgerteil 15 eingreift, auf welchem die Zahnbürsten 19 angeordnet zu liegen kommen. Dieses Trägerbasisteil 15 ist entlang von Führungen 48 verschieblich gelagert, um zusammen mit den Zahnbürsten 19 die Hubbewegung auszuführen. Erneut sind je vier Zahnbürsten 19 vorgesehen, wobei jedoch aufgrund der Uebersichtlichkeit auf die Darstellung der Borsten 21 verzichtet worden ist.

Mittig je von der Bürstenanordnung, umfassend die vier Bürsten 19, ist ein Kipphebel angeordnet, umfassend einen Verbindungssteg 47 und eine endständige Kippstange 46, wobei der Verbindungssteg 47 über die Drehachse 17 mit den Bürsten 19 verbunden ist. Durch Absenken der Kippstange 46 werden die Bürsten nach innen geschwenkt, und durch eine Kippbewegung nach oben werden entsprechend die Bürsten nach aussen geschwenkt. Mittels einer weiter vorgesehenen Spannfeder 49 sind die Zahnbürsten 19 bzw. der Kipphebel, umfassend die Stange 46 und die Verbindung 47, nach innen hin bzw. nach unten vorgespannt, so dass ohne äussere Einwirkung die Bürsten 19 nach innen gekippt angeordnet sind. Vorteilhafterweise, damit sich die Bürsten jeweils an individuelle Zahnformen anpassen können, umfassen sie je im Bereich ihres Fusspunktes flexible Partien 19a, welche beispielsweise aus einem gummielastischen oder elastomeren Material, wie beispielsweise Desmopan der Firma Beyer, hergestellt sind. Allerdings können dafür irgendwelche elastomere polymere Materialien verwendet werden, welche die entsprechenden Voraussetzungen für die Verwendung in der Dentalhygiene mit sich bringen.

Mittig und die Zahnräder 7 und 11 überdeckend ist eine weitere Halteplatte 22 angeordnet auf welcher mittige Bürsten 19b angeordnet sind, geeignet zum Reinigen der Zahnkrone, was insbesondere bei den am Gebiss endständig angeordneten Zähnen vorteilhaft ist.

Beim Betrieb eines Reinigungskopfes gemäss den Fig. 12 und 13 rotieren die vier Exzenterstangen 42 jeweils um die mittige Drehachse der beiden Zahnräder 11, wodurch nun je die Abschnitte 43 von unten her am Kipphebel 46 angreifen und diesen nach oben treiben. Dadurch werden die Zahnbürsten 19 nach aussen gekippt, wodurch bei Hubbewegung in Richtung zu den Zähnen hin die Bürsten von den Zähnen entfernt angeordnet sind. Nach erfolgter Hubbewegung nach oben, bewirkt durch die Abschnitte 44 der Exzenterstangen 42, werden die Abschnitte 43, da sie seitlich gegenüber den Abschnitten 44 verschoben bzw. angewinkelt angeordnet sind, nach aussen ausgelenkt, wodurch die Stange 46 freigegeben wird und nach unten abkippt. Sofort, infolge der Federkraft der Spannfeder 49, werden die Zahnbürsten 19 nach innen gekippt, wodurch die Bürsten bei der Hubbewegung nach unten die Zähne reinigen.

Die in den Fig. 2 bis 13 dargestellten Antriebsmechanismen und entsprechend ausgebildeten Reinigungsköpfe stellen selbstverständlich nur Beispiele dar, welche abgeändert, modifiziert oder ergänzt werden können. Ob nun die kraftübertragung von der Antriebswelle mittels eines Kegelgetriebes erfolgt, mittels eines Schrägradpaargetriebes oder mittels eines Schneckengetriebes ist unerheblich, wesentlich ist, dass zunächst mittels der Antriebswelle ein Bewegungsübertragungsorgan angetrieben wird, mittels welchem eine Hubbewegung erzeugt wird. Mittels dieser Hubbewegung kann einerseits eine Hubbewegung der Reinigungsorgane erzeugt werden und anderseits vorzugsweise gleichzeitig eine Pendelschwenkbewegung bzw. eine Kippbewegung dieser Reinigungsorgane.

Allerdings kann die Pendelschwenkbewegung bzw. die Kippbewegung der Reinigungsorgane auch über ein unabhängiges Antriebsorgan, wie beispielsweise ein pneumatisches oder hydraulisches Antriebsorgan, erzeugt werden.

Auch ist es unerheblich, aus welchen Materialien die einzelnen Antriebsorgane, Wellen, Gehäuse etc. gefertigt sind, vorzugsweise ist beispielsweise die Antriebswelle aus Metall gefertigt, währenddem die im Reinigungskopf angeordneten Antriebsorgane sowie Bewegungsübertragungsorgane, Zahnräder etc. aus einem Kunststoff gefertigt sind, der einerseits hohe Abriebfestigkeit aufweist und anderseits heisswasserbeständig ist. Wichtige Kriterien für die Auswahl des Konstruktionswerkstoffes, wie insbesondere eines Kunststoffes, sind die mechanische Beanspruchung und gegebenenfalls Chemikalien bzw. Heisswasserbeständigkeit. Derartige Materialien zur Herstellung von Reinigungsköpfen von elektrischen Zahnbürsten sind allerdings bestens bekannt, weshalb an dieser Stelle auf die Nennung optimaler Materialien verzichtet werden kann.

## Patentansprüche

1. Verfahren zum oszillierenden Antrieb mindestens eines Zahnreinigungsorganes (19) an einem Zahnreinigungsgerät mit einem Antriebsaggregat und zwischen Antriebsaggregat und Reinigungsorgan wirkendem ersten Bewegungsübertrager (11) mit einer Achse (A₂), dadurch gekennzeichnet, dass
- eine von einer Drehbewegung des Antriebsaggregates (1) abgeleitete Drehbewegung um eine Achse (A₁) eines zweiten Bewegungsübertragungsorgans (7), welche Achse gewinkelt zur Drehachse des Antriebsaggregates verläuft, in eine Drehbewegung um die Achse (A₂) des ersten Bewegungsübertragers (11) gewandelt wird, welche zur Achse (A₁) des zweiten Bewegungsübertragungsorgans (7) gewinkelt ist, und daß
- die Drehbewegung um die Achse (A₂) des ersten Bewegungsübertragers (11) in eine Hubbewegung gewandelt wird, deren Bewegungsrichtung im wesentlichen parallel zur Achse (A₁) des zweiten Bewegungsübertragungsorgans (7) verläuft und am Reinigungsorgan (19) eine Hubbewegung bewirkt.

2. Verfahren nach Anspruch 1, dadurch gekennzeichnet, dass die Hubbewegung am Bewegungsübertrager mit einer Rotationsbewegung überlagert wird, wodurch das Reinigungsorgan (19) um das zweite Bewegungsübertragungsorgan (7) rotierbar ist.

3. Verfahren nach einem der Ansprüche 1 oder 2, dadurch gekennzeichnet, dass mittels der Hubbewegung zusätzlich eine Pendelbewegung des Reinigungsorgans bewirkt wird.

4. Verfahren nach einem der Ansprüche 1 bis 3 zum oszillierenden Schwenkantrieb mindestens eines Reinigungsorganes (19), an welchem Reinigungsorgan mittels eines Antriebsaggregates eine Hub- und eine Pendelbewegung bewirkt werden, dadurch gekennzeichnet, dass die Hubbewegung quer auf eine Schwenkachse (17) am Reinigungsorgan (19) für das Bewirken der Hubbewegung der Reinigungsorgane (19) wirkt, gleichzeitig an der Schwenkachse angeordnete Rotationsmittel (23) in Rotation in die eine Richtung bei Hub nach unten oder in die andere Richtung bei Hub nach oben versetzt werden, mittels welcher Rotationsmittel (23) bzw. deren Rotation das Reinigungsorgan (23) in die Pendelbewegung versetzt wird.

5. Verfahren nach Anspruch 4, dadurch gekennzeichnet, dass die Rotationsmittel (23) durch Abrollen entlang einer Ebene (29), vorzugsweise parallel zur Hubbewegung, in Rotation versetzt werden und die Rotationsbewegung auf das Reinigungsorgan (19) zum Bewirken der Pendelbewegung mittels Reibung übertragen wird.

6. Verfahren nach einem der Ansprüche 1 bis 3, zum oszillierenden Schwenkantrieb mindestens eines Reinigungsorganes (19), an weichem Reinigungsorgan mittels eines Antriebsaggregates eine Hubbewegung bewirkt wird, dadurch gekennzeichnet, dass spann- oder klickfederartige Mittel (35, 39) vorgesehen sind, welche mit dem Reinigungsorgan (19, 19a) wirkverbunden sind und dieses in zwei Schwenkpositionen vorspannend positionieren, wobei die spann- bzw. klickfederartigen Mittel mittels mindestens eines Bezugssystems (37, 37a, 37b) bei der Hubbewegung gespannt oder entspannt bzw. umgespannt werden, wodurch das Reinigungsorgan (19) bzw. die Schwenkachse zwischen den beiden Positionen hin und her geschwenkt wird.

7. Verfahren nach Anspruch 6, dadurch gekennzeichnet, dass die am Bewegungsübertrager erzeugte und auf das Reinigungsorgan (19) übertragene Hubbewegung die Hubbewegung der Schwenkachse bewirkt und gleichzeitig durch Spannen oder Entspannen bzw. Umspannen der spann- oder klickfederartigen Mittel (35, 39) das Reinigungsorgan (19) in die Pendelbewegung versetzt.

8. Verfahren nach einem der Ansprüche 1 bis 3, zum oszillierenden Schwenkantrieb mindestens eines Reinigungsorganes, an welchem Reinigungsorgan (19) mittels eines Antriebsaggregates eine Hubbewegung bewirkt wird, dadurch gekennzeichnet, dass mittels einer weiteren Hubbewegung ein mit dem Reinigungsorgan (19) hebelartig verbundenes Schwenkorgan (46) synchron mit der Hubbewegung gegen eine Federkraft (49) wirkend betätigt wird, derart, dass bei der einen Hubbewegung des Reinigungsorganes (19) dieses mittels des Schwenkorganes (46) in eine Schwenkposition getrieben wird und bei der anderen Hubbewegung durch die Federkraft (49) in die andere Schwenkposition getrieben wird.

9. Verfahren nach Anspruch 8, dadurch gekennzeichnet, dass die mittels der vom Antriebsaggregat durch den Bewegungsübertrager (11) abgeleitete Drehbewegung in zwei Hubbewegungen gewandelt wird, wobei die eine Hubbewegung den Hub bewirkt und die andere weitere Hubbewegung auf das Schwenkorgan (46) wirkt, um die Pendelbewegung des Reinigungsorganes zu bewirken.

10. Verfahren nach Anspruch 9, dadurch gekennzeichnet, dass die Drehbewegung um die zweite Achse (A₂) in zwei Hubbewegungen unterschiedlichen Hubes gewandelt wird, dass das Reinigungsorgan (19) schwenkgelagert ist und die eine Hubbewegung quer auf die Schwenkachse (17) übertragen wird und die andere als Pendelantrieb auf die Schwenkachse wirkt.

11. Zahnreinigungsvorrichtung mit einem Antriebsaggregat zum Unterstützen der Zahnreinigung mittels durch das Antriebsaggregat oszillierend betriebener Reinigungsorgane, wobei das Antriebsaggregat (1) mindestens eine Antriebswelle (1) aufweist, damit wirkverbunden mindestens ein durch die Antriebswelle rotierbar antreilbbarer erster Bewegungsübertrager (11), an welchem Mittel (13) vorgesehen sind, geeignet für das Erzeugen mindestens einer Hubbewegung, welcher Bewegungsübertrager mit den Reinigungsorganen (19) wirkverbunden ist, um wenigsten an einem Teil der Reinigungsorgane eine Hubbewegung auszulösen, dadurch gekennzeichnet, dass zwischen dem Antriebsaggregat (1) und dem ersten Bewegungsübertrager (11) ein zweites Bewegungsübertragungsorgan (7) angeordnet ist, mit dem der Antrieb von der Antriebswelle (1) auf den ersten Bewegungsübertrager (11) übertragen wird, wobei die Drehachse (A₁) des zweiten Bewegungsübertragungsorganes (7) gewinkelt ist zur Drehachse des Antriebsaggregates und wobei die Drehachse (A₂) der ersten Bewegungsübertragers (11) gewinkelt ist in bezug auf die Drehachse (A₁) des zweiten Bewegungsübertragungsorganes (7).

12. Zahnreinigungsvorrichtung nach Anspruch 11, dadurch gekennzeichnet, dass ein Handgriff und ein Kopfteil vorgesehen sind und Reinigungsorgane (19) an oder in einem endständig am Kopfteil angeordneten Reinigungskopf (2) vorgesehen sind, wobei mindestens zwei Teile der Reinigungsorgane (19) am Reinigungskopf sich gegenüberliegend und entgegenwirkend angeordnet sind, um mindestens eine Hubbewegung in bezug auf den Reinigungskopf (2) und je eine Pendelschwenkbewegung je in bezug zum anderen Teil der Reinigungsorgane auszuführen.

13. Zahnreinigungsvorrichtung nach einem der Ansprüche 11 oder 12, dadurch gekennzeichnet, dass wenigstens zwei Teile der Reinigungsorgane am Reinigungskopf (2), ausgebildet sind, un einen Zahn (41) konkav zu umfassen, damit die Reinigungsorgane (19) die Zähne auf mindestens zwei ihrer Seiten umfassen.

14. Zahnreinigungsvorrichtung nach einem der Ansprüche 11 bis 13, dadurch gekennzeichnet, dass der Reinigungskopf mindestens zweiteilig ausgebildet ist, wobei das eine Teil (2b) beweglich mit dem anderen Teil (2), wie beispielsweise einem Basisteil, verbunden ist.

15. Zahnreinigungsvorrichtung nach einem der Ansprüche 11 bis 14, dadurch gekennzeichnet, dass das Antriebsaggregat eine Antriebswelle (1) ist, welche über ein endständiges Schnecken-, kegel- oder winkelförmiges Zahnrad (3) mit dem im Reinigungskopf (2) angeordneten ersten Bewegungsübertragungsorgan (11) verbunden ist und dieses antreibt, wobei dieses erste Bewegungsübertragungsorgan vorzugsweise ein radförmig, scheibenförmig oder zylinderförmig ausgebildetes Organ ist, mit mindestens einem in bezug auf seine Drehachse (A₂) exzentrisch angeordneten wellen-, zapfen- oder nockenartigen Organ (13), wobei das Bewegungsübertragungsorgan (11) und das exzentrische Organ (13) derart angeordnet sind, um die in bezug auf die Drehachse der Antriebswelle gewinkelte Hubbewegung zu erzeugen.

16. Zahnreinigungsvorrichtung nach einem der Ansprüche 11 bis 15, dadurch gekennzeichnet, dass das erste Bewegungsübertragungsorgan (11) durch mindestens zwei sich gegenüberliegende rad-, scheiben- oder zylinderförmige Organe gebildet wird, mit je an der Aussenseite mindestens einem exzentrischen Organ (13), welche exzentrischen Organe mit einem frei um das Bewegungsübertragungsorgan (11) drehbar und in Hubbrichtung verschieblich gelagert angeordneten Trägerelement (14) verbunden sind, welches mit mindestens einem Teil der Reinigungsorgane (19) wirkverbunden ist, um an diesem bzw. an diesen Reinigungsorganen die Hubbewegung zu bewirken.

17. Zahnreinigungsvorrichtung mit einem Antriebsaggregat zum Unterstützen der Zahnreinigung mittels durch das Antriebsaggregat oszillierend betriebener Reinigungsorgane nach einem der Ansprüche 11 bis 16, dadurch gekennzeichnet, dass die Zahnreinigungsorgane (19) schwenkbeweglich um eine Schwenkachse (17) gelagert angeordnet sind und im Bereich der Schwenkachse (17) rollen- oder zahnradartige Rotationselamente (23) vorgesehen sind, mit welchen die Zahnreinigungsorgane (19) beispielsweise durch Reibung wirkverbunden sind, und welche rollen- oder zahnradartigen Elemente (23) gegen eine komplementäre Wandung aufliegend oder eingreifend beim Ausführen einer Hubbewegung der Zahnreinigungsorgane (19) um die Schwenkachse (17) rotierbar sind, wodurch eine Pendelbewegung der Zahnreinigungsorgane bewirkt wird.

18. Zahnreinigungsvorrichtung nach Anspruch 17, dadurch gekennzeichnet, dass die Rotationselemente (23) mit der Schwenkachse (17) und/oder mit mindestens einem Teil der Reinigungsorgane (19) durch Reibung verbunden sind, derart, dass bei Rotation in eine Richtung die Reinigungsorgane in eine Pendel- bzw. Schwenkposition getrieben werden und bei Rotation in die andere Richtung in die andere Pendel- bzw. Schwenkposition.

19. Zahnreinigungsvorrichtung nach einem der Ansprüche 11 bis 16, mit einem Antriebsaggregat zum Unterstützen der Zahnreinigung mittels durch das Antriebsaggregat oszillierend betriebener Reinigungsorgane , dadurch gekennzeichnet, dass spann- oder klickfederartige Mittel (35, 39) vorgesehen sind, welche mit den Reinigungsorganen (19) wirkverbunden sind und diese in zwei Pendel- bzw. Schwenkpositionen positionieren, wobei die sich gegenüberliegend und entgegenwirkend angeordneten Reinigungsorgane (19) um eine Schwenkachse (17) von der einen in die andere Schwenkposition und umgekehrt schwenkbar angeordnet sind, weiter mindestens ein Bezugssystem (37, 37a, 37b) vorgesehen ist, um die spann- bzw. klickfederartigen Mittel (35) bei Bewegen der Schwenkachse (17) mittels einer Hubbewegung gegen und/oder von dem oder den Bezugssystemen (37, 37a, 37b) zu spannen oder zu entspannen bzw. umzuspannen, wodurch die Zahnreinigungsorgane (19) nach innen oder nach aussen in bezug auf den Reinigungskopf schwenkbar sind bzw. in der einen oder anderen Schwenkposition angeordnet sind.

20. Zahnreinigungsvorrichtung nach einem der Ansprüche 11 bis 16, mit einem Antriebsaggregat zum Unterstützen der Zahnreinigung mittels durch das Antriebsaggregat oszillierend betriebener Reinigungsorgane, dadurch gekennzeichnet, dass ein Antriebsorgan vorgesehen ist für das Erzeugen einer weiteren Hubbewegung sowie ein mit wenigstens einem Teil der Reinigungsorgane (19) hebelartig verbundenes Schwenkorgan (46), das mittels der weiteren Hubbewegung betätigbar ist, um die Reinigungsorgane in eine Position zu schwenken, sowie Federmittel (49), mittels welcher die Reinigungsorgane (19) in eine andere Schwenkposition vorgespannt treibbar sind.

21. Zahnreinigungsvorrichtung nach Anspruch 20, dadurch gekennzeichnet, dass das Antriebsorgan mit dem Antriebsaggregat (1) identisch ist und das Bewegungsübertragungsorgan (11) mit mindestens zwei exzentrischen Organen (43, 44) wirkverbunden ist zum Erzeugen der einen und der anderen Hubbewegung.

22. Zahnreinigungsvorrichtung nach einem der Ansprüche 11 bis 21, dadurch gekennzeichnet, dass die Reinigungsorgane (19) mindestens einen gummigefederten Abschnitt (19a) aufweisen, um sich optimal an unterschiedliche Konturen eines Zahnes (41) anpassen zu können.

23. Zahnreinigungsvorrichtung nach einem der Ansprüche 11 bis 22, dadurch gekennzeichnet, dass vom Antrieb unabhängig wirkende Reinigungsorgane (19b), vorzugsweise im zentralen und/oder peripheren Bereich des Reinigungskopfes (2, 2b), vorgesehen sind, um insbesondere im Interdentalraum reinigend zu wirken.

## Claims

1. Process for oscillating drive of at least one tooth cleaning element (19) on a tooth cleaning device with a drive unit end a first movement transmitter (11) acting between the drive unit and cleaning element with an axis (A₂), characterised in that
- a rotational movement derived from a rotational movement of the drive unit (1) about an axis (A₁) of a second movement transmitter element (7), the said axis running at an angle to the axis of rotation of the drive unit, is converted into a rotational movement about the axis (A₂) of the first movement transmitter (11), the said axis being angled to axis (A₁) of the second movement transmitter element (7), and that.
- the rotational movement about the axis (A₂) of the first movement transmitter (11) is converted into a stroke movement, the direction of movement of which is essentially parallel to the axis (A₁) of the second movement transmitter element (7) and effects a stroke movement at the cleaning element (19).

2. Process according to claim 1, characterised in that the stroke movement at the movement transmitter is superimposed with a rotational movement, so that the cleaning element (19) can rotate about the second movement transmitter element (7).

3. Process according to any of claims 1 or 2, characterised in that by means of the stroke movement in addition a reciprocating movement of the cleaning element is effected.

4. Process according to any of claims 1 to 3 for oscillating swivel drive of at least one cleaning element (19) at which by means of a drive unit a stroke and a reciprocating movement are effected, characterised in that the stroke movement acts transverse to a swivel axis (17) at the cleaning element (19) to effect the stroke movement of the cleaning elements (19), at the same time rotational means (23) arranged on the swivel axis are not in rotation in the one direction on a downward stroke or in the other direction on on upward stroke, by means of which rotation means (23) or their rotation the cleaning element (23) is set in the reciprocating movement.

5. Process according to claim 4, characterised in that the rotation means (23), by rolling along a plane (29) preferably parallel to the stroke movement, are set in rotation and the rotational movement is transferred to the cleaning element (19) to effect the reciprocating movement by means of friction.

6. Process according to any of claims 1 to 3 for oscillating swivel drive of at least one cleaning element (19), at which by means of a drive unit a stroke movement is effected, characterised in that tension or click spring-like means (35, 39) are provided which are actively connected with the cleaning element (19, 19a) and position this pretensioned in two swivel positions, where the tension or click spring-like means are tensioned or released or retensioned during the stroke movement by means of at least one reference system (37, 37a, 37b) such that the cleaning element (19) or the swivel axis is swivelled to and fro between the two positions.

7. Process according to claim 6, characterised in that the stroke movement generated at the movement transmitter and transferred to the cleaning element (19) effects the stroke movement of the swivel axis and at the same time by tensioning or releasing or retensioning of the tension or click spring-like means (35, 39) sets the cleaning element (19) in the reciprocating movement.

8. Process according to any of claims 1 to 3 for oscillating swivel drive of at least one cleaning element (19), at which by means of a drive unit a stroke movement is effected, characterised in that by means of a further stroke movement a swivel element (46) connected in a lever-like manner with the cleaning element (19) is activated in synchrony with the stroke movement against a spring force (49) such that on one stroke movement of the cleaning element (19) this is driven into one swivel position by means of the swivel element (46) and on the other stroke movement driven into the other swivel position by the spring force (49).

9. Process according to claim 8, characterised in that the rotational movement derived by the movement transmitter (11) by means of the drive unit is converted into two stroke movements, where the one stroke movement causes the lift and the other stroke movement acts on the swivel element (46) in order to effect the reciprocating movement or the cleaning element.

10. Process according to claim 9, characterised in that the rotational movement about the second axis (A₂) is transformed into two stroke movements of different travel, that the cleaning element (19) is swivel-mounted and the one stroke movement is transmitted transverse to the swivel axis (17) and the other acts on the swivel axis as a reciprocating drive.

11. Tooth cleaning device with a drive unit to support the tooth cleaning by means of cleaning elements operated oscillating by the drive unit, where the drive unit (1) has at least one drive shaft (1), actively connected to this at least one first movement transmittor (11) rotatably driveable by the drive shaft, on which transmitter means (13) are provided suitable for generating a stroke movement, the said movement transmitter being actively connected with the cleaning element (19) in order to trigger a stroke movement at least on part of the cleaning element, characterised in that between the drive unit (1) and the first movement transmitter (11) is arranged a second movement transmitter element (7) by which the drive in transferred from the drive shaft (1) to the first movement transmitter (11), where the rotational axis (A₁) of the second movement transmitter element (7) is angled to the rotational axis of the drive unit and where the rotational axis (A₂) of the first movement transmitter (11) is angled in relation to the rotational axis (A₁) of the second movement transmitter element (7).

12. Tooth cleaning device according to claim 11, characterised in that a handle and a header part are provided and cleaning elements (19) are provided on or in a cleaning head (2) arranged at the end of the header part, where at least two parts of the cleaning elements (19) on the cleaning head are arranged opposite each other and acting against each other in order to execute at least one stroke movement in relation to the cleaning head (2) and one reciprocating swivel movement each in relation to the other part of the cleaning element.

13. Tooth cleaning device according to any of claims 11 or 12, characterised in that at least two parts of the cleaning elements on the cleaning head (2) are formed in order to surround concavely a tooth (41), so that the cleaning elements (19) surround the teeth on at least two of their sides.

14. Tooth cleaning device according to any of claims 11 to 13, characterised in that the cleaning head is formed in at least two parts, where one part (2b) is connected mobile to the other part (2) such as for example a base part.

15. Tooth cleaning device according to any of claims 11 to 14, characterised in that the drive unit is a drive shaft (1) which is connected via an end-mounted helical, conical or angular toothed wheel (3) with the first movement transmitter element (11) arranged in the cleaning head (2) and drives this, where this first movement transmitter element is preferably an element shaped like a wheel, disc or cylinder with at least one shaft-, peg- or cam-like element (13) arranged eccentrically in relation to its axis of rotation (A₂), where the movement transmitter element (11) and the eccentric element (13) are arranged so is to generate the stroke movement angled in relation to the rotational axis of the drive shaft.

16. Tooth cleaning device according to any of claims 11 to 15, characterised in that the first movement transmitter element (11) is formed by at least two opposing wheel, disc or cylinder-shaped elements each with at least one eccentric element (13) on the outside, the said eccentric elements being connected with a carrier element (14) arranged freely rotatable about the movement transmitter element (11) and displaceable in the stroke direction, the said carrier element being actively connected with at least one port of the cleaning elements (19) in order to effect the stroke movement at this or these cleaning organs.

17. Tooth cleaning device with a drive unit to support the tooth cleaning by means of cleaning elements driven oscillating by the drive unit according to any of claims 11 to 16, characterised in that the tooth cleaning elements (19) are arranged mounted swivellably about a swivel axis (17) and in the area of the swivel axis (17) roller or gear-like rotation elements (23) are provided with which the tooth cleaning elements (19) are actively connected for example by friction and the said roller or gear-like elements (23) lying against or engaging in a complementary wall are rotatable about the swivel axis (17) on performance of a stroke movement of the tooth cleaning elements (19), which effects a reciprocating movement of the tooth cleaning elements.

18. Tooth cleaning device according to claim 17, characterised in that the rotation elements (23) are connected with the swivel axis (17) and/or at least one part of the cleaning elements (19) by friction such that on rotation in one direction the cleaning elements are driven into one reciprocating or swivel position and on rotation in the other direction into the other reciprocating or swivel position.

19. Tooth cleaning device according to any of claims 11 to 16 with a drive unit to support the tooth cleaning by means of cleaning elements driven oscillating by the drive unit, characterised in that tension or click spring-like means (35, 39) are provided which are actively connected with the cleaning elements (19) and position these in two reciprocating or swivel positions, where the opposing and counteracting cleaning elements (19) are arranged to swivel about a swivel axis (17) from the first swivel position to the second and vice versa, also at least one reference system (37, 37a, 37b) is provided in order to tension or release or retention the tension or click spring-like means (35) on movement of the swivel axis (17) by means of a stroke movement against and/or from the reference system or systems (37, 37a, 37b), as a result of which the tooth cleaning elements (13) are swivellable to the inside or outside in relation to the cleaning head or arranged in one or the other swivel positions.

20. Tooth cleaning device according to any of claims 11 to 16 with a drive unit to support the tooth cleaning by means of cleaning elements driven oscillating by the drive unit, characterised in that a drive unit is provided to generate a further stroke movement and a swivel element (46) is provided which is connected in a lever-like manner with at least one part of the cleaning elements (19) and which can be activated by moans or the further stroke movement in order to swivel the cleaning elements into one position, and spring means (49) are provided by means of which the cleaning elements (19) can be driven pretensioned into the other swivel position.

21. Tooth cleaning device according to claim 20, characterised in that the drive element is identical to the drive unit (1) and the movement transmitter element (11) is actively connected with at least two eccentric elements (43, 44) to generate the one and the other stroke movements.

22. Tooth cleaning device according to any of claim 11 to 21, characterised in that the cleaning elements (19) have at least one rubber resilient section (19a) in order to be able to adapt optimally to different contours of a tooth (41).

23. Tooth cleaning device according to any of claims 11 to 22, characterised in that cleaning elements (19b) acting independently of the drive, preferably in the central and/or peripheral area of the cleaning head (2, 2b) are provided in order in particular to clean the interdental area.

## Revendications

1. Procédé pour l'entraînement oscillatoire d'au moins un organe de nettoyage dentaire (19) sur un appareil de nettoyage dentaire comportant une unité d'entraînement et un premier organe de transmission de mouvement (11) qui présente un axe (A₂) et qui agit entre l'unité d'entraînement et l'organe de nettoyage, caractérisé :
- en ce qu'un mouvement rotatif, dérivé d'un mouvement rotatif de l'unité d'entraînement (1), autour d'un axe (A₁) d'un second organe de transmission de mouvement (7) définissant un angle par rapport à l'axe de rotation de ladite unité, est transformé en un mouvement rotatif autour de l'axe (A₂) du premier organe de transmission de mouvement (11), lequel axe (A₂) définit un angle par rapport à l'axe (A₁) du second organe de transmission de mouvement (7),
- et en ce que le mouvement rotatif autour de l'axe (A₂) du premier organe de transmission de mouvement (11) est transformé en un mouvement rectiligne dont le sens est globalement parallèle à l'axe (A₁) du second organe de transmission de mouvement (7) et provoque sur l'organe de nettoyage (19) un mouvement rectiligne.

2. Procédé selon la revendication 1, caractérisé en ce qu'un mouvement de rotation est ajouté au mouvement rectiligne au niveau de l'organe de transmission de mouvement, moyennant quoi l'organe de nettoyage (19) est apte à tourner autour du second organe de transmission de mouvement (7).

3. Procédé selon la revendication 1 ou 2, caractérisé en ce que grâce au mouvement rectiligne, un mouvement alternatif de l'organe de nettoyage est provoqué en supplément.

4. Procédé selon l'une des revendications 1 à 3 pour l'entraînement pivotant oscillatoire d'au moins un organe de nettoyage (19) au niveau duquel un mouvement rectiligne et un mouvement oscillatoire sont provoqués à l'aide d'une unité d'entraînement, caractérisé en ce que le mouvement rectiligne agit transversalement sur un axe de pivotement (17) prévu sur l'organe de nettoyage (19), pour provoquer le mouvement rectiligne des organes de nettoyage (19), et simultanément, des moyens de rotation (23) prévus sur l'axe de pivotement tournent dans un sens si le mouvement rectiligne est descendant, et dans l'autre sens si le mouvement rectiligne est ascendant, ces moyens de rotation (23) ou plus exactement leur rotation provoquant le mouvement alternatif de l'organe de nettoyage (19).

5. Procédé selon la revendication 4, caractérisé en ce que les moyens de rotation (23) se mettent à tourner en roulant le long d'un plan (29) de préférence parallèle au mouvement rectiligne, et le mouvement de rotation est transmis par friction à l'organe de nettoyage (19) pour provoquer le mouvement alternatif.

6. Procédé selon l'une des revendications 1 à 3 pour l'entraînement pivotant oscillatoire d'au moins un organe de nettoyage (19) au niveau duquel un mouvement rectiligne est provoqué à l'aide d'une unité d'entraînement, caractérisé en ce qu'il est prévu des moyens en forme de ressort de tension ou à déclic (35, 39) qui sont en relation fonctionnelle avec l'organe de nettoyage (19, 19a) et qui positionnent celui-ci dans deux positions de pivotement grâce à une prétension, ces moyens en forme de ressort de tension ou à déclic étant tendus ou relâchés et inversés grâce à au moins un système de référence (37, 37a, 37b), lors du mouvement rectiligne, ce qui provoque le pivotement alternatif de l'organe de nettoyage (19) ou de l'axe de pivotement entre les deux positions.

7. Procédé selon la revendication 6, caractérisé en ce que le mouvement rectiligne produit au niveau de l'organe de transmission de mouvement et transmis à l'organe de nettoyage (19) provoque le mouvement rectiligne de l'axe de pivotement et provoque en même temps, grâce à la tension ou au relâchement et à l'inversion des moyens en forme de ressort de tension ou à déclic (35, 39), le mouvement alternatif de l'organe de nettoyage (19).

8. Procédé selon l'une des revendications 1 à 3 pour l'entraînement pivotant oscillatoire d'au moins un organe de nettoyage (19) au niveau duquel un mouvement rectiligne est provoqué à l'aide d'une unité d'entraînement, caractérisé en ce que grâce à un second mouvement rectiligne, un organe pivotant (46) relié à la manière d'un levier à l'organe de nettoyage (19) est actionné de manière synchrone avec le mouvement rectiligne pour agir à l'encontre d'une force de ressort (49), de telle sorte que lors d'un mouvement rectiligne de l'organe de nettoyage (19), celui-ci est poussé dans une position de pivotement grâce à l'organe de pivotement (46), et lors du second mouvement rectiligne, il est poussé dans l'autre position de pivotement grâce à la force de ressort (49).

9. Procédé selon la revendication 8, caractérisé en ce que le mouvement rotatif dérivé de l'unité d'entraînement par l'organe de transmission de mouvement (11) est transformé en deux mouvements rectilignes, l'un provoquant la course tandis que l'autre agit sur l'organe de pivotement (46) pour provoquer le mouvement alternatif de l'organe de nettoyage.

10. Procédé selon la revendication 9, caractérisé en ce que le mouvement rotatif autour du second axe (A₂) est transformé en deux mouvements rectilignes présentant des courses différentes, en ce que l'organe de nettoyage (19) est monté pivotant et un mouvement rectiligne est transmis transversalement à l'axe de pivotement (17) tandis que l'autre agit comme un entraînement alternatif sur l'axe de pivotement.

11. Dispositif de nettoyage dentaire comportant une unité d'entraînement, pour aider au nettoyage dentaire à l'aide d'organes de nettoyage actionnés de façon oscillatoire par l'unité d'entraînement, ladite unité d'entraînement (1) comportant au moins un arbre d'entraînement (1) et, en relation fonctionnelle avec celui-ci, au moins un premier organe de transmission de mouvement (11) qui est apte à être entraîné en rotation par l'arbre d'entraînement, sur lequel sont prévus des moyens (13) aptes à produire au moins un mouvement rectiligne et qui est en relation fonctionnelle avec les organes de nettoyage (19) pour déclencher un mouvement rectiligne sur une partie au moins des organes de nettoyage, caractérisé en ce qu'il est prévu entre l'unité d'entraînement (1) et le premier organe de transmission de mouvement (11) un second organe de transmission de mouvement (7) grâce auquel l'entraînement est transmis à partir de l'arbre (1) au premier organe de transmission de mouvement (11), étant précisé que l'axe de rotation (A₁) du second organe de transmission de mouvement (7) définit un angle par rapport à l'axe de rotation de l'unité d'entraînement et que l'axe de rotation (A₂) du premier organe de transmission de mouvement (11) définit un angle par rapport à l'axe de rotation (A₁) du second (7).

12. Dispositif de nettoyage dentaire selon la revendication 11, caractérisé en ce qu'il est prévu une poignée et une partie de tête, et des organes de nettoyage (19) sont prévus sur ou dans une tête de nettoyage (2) disposée à l'extrémité de la partie de tête, étant précisé qu'au moins deux parties des organes de nettoyage (19) sont disposées sur la tête de nettoyage, face à face et en agissant en sens inverse afin de décrire au moins un mouvement rectiligne par rapport à la tête de nettoyage (2) et un mouvement pivotant alternatif par rapport à l'autre partie des organes de nettoyage.

13. Dispositif de nettoyage dentaire selon la revendication 11 ou 12, caractérisé en ce qu'au moins deux parties des organes de nettoyage sont formées sur la tête de nettoyage (2) pour entourer une dent (41) suivant une forme concave, afin que les organes de nettoyage (19) entourent les dents sur au moins deux cotés.

14. Dispositif de nettoyage dentaire selon l'une des revendications 11 à 13, caractérisé en ce que la tête de nettoyage est au moins en deux parties, une première partie (2b) étant reliée, mobile, à la seconde (2), définie par exemple par une partie de base.

15. Dispositif de nettoyage dentaire selon l'une des revendications 11 à 14, caractérisé en ce que l'unité d'entraînement consiste en un arbre d'entraînement (1) qui est relié par l'intermédiaire d'une roue dentée hélicoïdale, conique ou à chevrons (3), située à l'extrémité, au premier organe de transmission de mouvement (11) disposé dans la tête de nettoyage (2), et qui entraîne cet organe (11), étant précisé que ce premier organe de transmission de mouvement est de préférence un organe en forme de roue, de disque ou de cylindre comportant au moins un organe en forme d'arbre, de tourillon ou de saillie (13) excentrique par rapport à son axe de rotation (A₂), et que ledit organe de transmission de mouvement (11) et l'organe excentrique (13) sont disposés de manière à produire le mouvement rectiligne suivant un certain angle par rapport à l'axe de rotation de l'arbre d'entraînement.

16. Dispositif de nettoyage dentaire selon l'une des revendications 11 à 15, caractérisé en ce que le premier organe de transmission de mouvement (11) est formé par au moins deux organes opposés en forme de roues, de disques ou de cylindres comportant chacun, sur leur côté extérieur, au moins un organe excentrique (13), les organes excentriques étant reliés à un élément de support (14) qui est apte à tourner librement autour de l'organe de transmission de mouvement (11), qui est monté mobile dans le sens du mouvement rectiligne et qui est en relation fonctionnelle avec une partie au moins des organes de nettoyage (19) afin de provoquer sur l'organe ou les organes de nettoyage le mouvement rectiligne.

17. Dispositif de nettoyage dentaire comportant une unité d'entraînement, pour aider au nettoyage dentaire à l'aide d'organes de nettoyage actionnés de façon oscillatoire par l'unité d'entraînement, selon l'une des revendications 11 à 16, caractérisé en ce que les organes de nettoyage dentaire (19) sont montés pivotants autour d'un axe de pivotement (17) et il est prévu dans la zone de l'axe de pivotement (17) des éléments de rotation en forme de galets ou de roues dentées (23) avec lesquels les organes de nettoyage dentaire (19) sont en relation fonctionnelle, par exemple par friction, et qui sont aptes à tourner autour de l'axe de pivotement (17) en s'appliquant ou en s'engrenant contre une paroi complémentaire lors d'un mouvement rectiligne des organes de nettoyage dentaire (19), ce qui provoque un mouvement alternatif de ces derniers.

18. Dispositif de nettoyage dentaire selon la revendication 17, caractérisé en ce que les éléments de rotation (23) sont reliés par friction à l'axe de pivotement (17) et/ou à une partie au moins des organes de nettoyage (19), de telle sorte que les organes de nettoyage sont poussés vers une position alternative ou de pivotement lors d'une rotation dans un sens, et vers l'autre position alternative ou de pivotement lors d'une rotation dans l'autre sens.

19. Dispositif de nettoyage dentaire selon l'une des revendications 11 à 16 comportant une unité d'entraînement, pour aider au nettoyage dentaire à l'aide d'organes de nettoyage actionnés de façon oscillatoire par l'unité d'entraînement, caractérisé en ce qu'il est prévu des moyens en forme de ressort de tension ou à déclic (35, 39) qui sont en relation fonctionnelle avec les organes de nettoyage (19) et qui positionnent ceux-ci dans deux positions alternatives ou de pivotement, étant précisé que les organes de nettoyage (19) disposés face à face et agissant en sens inverse sont disposés pour pouvoir pivoter autour d'un axe de pivotement (17) d'une position de pivotement à l'autre et inversement, et il est prévu également au moins un système de référence (37, 37a, 37b) pour tendre ou relâcher et inverser les moyens en forme de ressort de tension ou à déclic (35) lors du mouvement de l'axe de pivotement (17) à l'aide d'un mouvement rectiligne vers le ou les systèmes de référence (37, 37a, 37b) ou à partir de ceux-ci, moyennant quoi les organes de nettoyage dentaire (19) sont aptes à pivoter vers l'intérieur ou vers l'extérieur par rapport à la tête de nettoyage et sont disposés dans l'une ou l'autre des positions de pivotement.

20. Dispositif de nettoyage dentaire selon l'une des revendications 11 à 16 comportant une unité d'entraînement, pour aider au nettoyage dentaire à l'aide d'organes de nettoyage actionnés de façon oscillatoire par l'unité d'entraînement, caractérisé en ce qu'il est prévu un organe d'entraînement pour produire un second mouvement rectiligne, ainsi qu'un organe de pivotement (46) qui est relié à la manière d'un levier à une partie au moins des organes de nettoyage (19) et qui est apte à être actionné à l'aide du second mouvement rectiligne pour faire pivoter les organes de nettoyage vers une position, et enfin des moyens formant ressort (49) grâce auxquels les organes de nettoyage (19) peuvent subir une prétension vers une autre position de pivotement.

21. Dispositif de nettoyage dentaire selon la revendication 20, caractérisé en ce que l'organe d'entraînement est identique à l'unité d'entraînement (1) et l'organe de transmission de mouvement (11) est en relation fonctionnelle avec au moins deux organes excentriques (43, 44) pour produire le premier et le second mouvement rectiligne.

22. Dispositif de nettoyage dentaire selon l'une des revendications 11 à 21, caractérisé en ce que les organes de nettoyage (19) comportent au moins une section élastique (19a) pour pouvoir s'adapter de façon optimale à des contours différents d'une dent (41).

23. Dispositif de nettoyage dentaire selon l'une des revendications 11 à 22, caractérisé en ce qu'il est prévu des organes de nettoyage (19b) qui agissent indépendamment de l'entraînement, de préférence dans la zone centrale et/ou périphérique de la tête de nettoyage (2, 2b), afin d'avoir une action nettoyante en particulier dans l'espace interdentaire.
